# EUROPÄISCHE PATENTSCHRIFT

(11) **EP 2 655 930 B1**
(45) Veröffentlichungstag und Bekanntmachung des Hinweises auf die Patenterteilung: **11.03.2015**
(21) Anmeldenummer: 11785023.0
(22) Anmeldetag: 21.11.2011
(51) Int. Cl.: F16H 3/62, F16H 3/66

(54) **MEHRSTUFENGETRIEBE IN PLANETENBAUWEISE**
MULTI-STAGE GEARBOX OF PLANETARY CONSTRUCTION
BOÎTE DE VITESSES MULTIÉTAGÉE À TRAINS PLANÉTAIRES

(30) Priorität: 20.12.2010 DE 102010063491
(43) Veröffentlichungstag der Anmeldung: 30.10.2013
(73) Patentinhaber: ZF Friedrichshafen AG, 88038 Friedrichshafen (DE)
(72) Erfinder: FELLMANN, Martin, 88045 Friedrichshafen (DE); BECK, Stefan, 88097 Eriskirch (DE); GUMPOLTSBERGER, Gerhard, 88048 Friedrichshafen (DE)
(86) Internationale Anmeldenummer: PCT/EP2011/070509
(87) Internationale Veröffentlichungsnummer: WO 2012/084368

(56) Entgegenhaltungen:
- DE-A1-102007 055 808
- DE-A1-102008 026 831
- DE-A1-102008 032 013
- DE-A1-102010 007 354
- US-A1- 2009 017 981

## Beschreibung

Die Erfindung betrifft ein Mehrstufengetriebe in Planetenbauweise, insbesondere ein Splittergetriebe einer Arbeitsmaschine, mit einem Gehäuse, in welchem vier Planetensätze und mehrere Wellen aufgenommen sind, und mit Schaltelementen, welche durch zumindest eine Bremse und Kupplungen gebildet sind und mittels deren gezielter Betätigung verschiedene Übersetzungsverhältnisse zwischen einer Antriebs- und einer Abtriebswelle darstellbar sind.

Ein derartiges Mehrstufengetriebe kommt vorzugsweise als Splittergetriebe bei Arbeitsmaschinen zum Einsatz, wobei darstellbare Gänge des Splittergetriebes durch eine gezielte Betätigung von Schaltelementen und einen hierbei innerhalb von Planetensätzen jeweils wirksamen Leistungsfluss definiert werden. Mit "Splittergetriebe" wird hierbei üblicherweise eine Getriebeeinheit bezeichnet, mit welcher mehrere Übersetzungsverhältnisse mit geringen Stufensprüngen darstellbar sind. Bei einem Gesamtgetriebe einer landwirtschaftlichen Arbeitsmaschine, wie beispielsweise einem Traktor, wird ein derartiges Splittergetriebe als Lastschaltgetriebe üblicherweise mit einem weiteren mehrgängigen Getriebe in Form eines Gruppengetriebes mit hohen Stufensprüngen kombiniert, so dass durch diese Kombination ein Gesamtgetriebe mit einer hohen Anzahl an darstellbaren Fahrstufen bei gleichzeitig hoher Spreizung erreichbar ist. Häufig kommen hierbei weitere Getriebeeinheiten in Form einer Kriechgang- und/oder einer Wendeeinheit hinzu.

Aus der EP 0495942 B1 ist ein Mehrstufengetriebe in Planetenbauweise bekannt, welches als Splittergetriebe einer landwirtschaftlichen Arbeitsmaschine mit einem Gruppengetriebe kombiniert wird. Dabei weist dieses Splittergetriebe ein Gehäuse auf, in welchem vier Planetensätze und mehrere Wellen angeordnet sind, von denen eine die Antriebswelle und eine andere die Abtriebswelle des Mehrstufengetriebes darstellt. Des Weiteren sind im Bereich der Wellen mehrere Schaltelemente vorgesehen, mittels deren gezielter Betätigung der Leistungsfluss innerhalb der vier Planetensätze variiert und damit verschiedene Übersetzungsverhältnisse zwischen der Antriebs- und der Abtriebswelle definierbar sind. Insgesamt sind hierdurch acht Übersetzungsverhältnisse des Mehrstufengetriebes darstellbar.

Ein weiteres Mehrstufengetriebe ist aus DE 102008026831 A1 bekannt, die alle Merkmale des Oberbegriffs des Anspruchs 1 offenbart.

Es ist die Aufgabe der vorliegenden Erfindung, ein Mehrstufengetriebe der eingangs genannten Art vorzuschlagen, mittels welchem eine hohe Anzahl an Übersetzungsverhältnisse mit einer geringen Bauteilanzahl und damit bei einem niedrigen Gewicht und geringem Herstellungsaufwand realisierbar ist. Ferner sollte sich eine nahezu geometrische Übersetzungsreihe darstellen lassen, sowie die Belastungen der einzelnen Getriebeelemente reduziert sein. Zudem sollen kleine und nahezu geometrische Stufensprünge zwischen den einzelnen Übersetzungsverhältnissen, sowie eine kompakte Bauweise möglich sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere drehbare Wellen und vier Planetensätze aufnimmt. Die Planetensätze sind dabei bevorzugt in axialer Richtung betrachtet in der Reihenfolge erster Planetensatz, zweiter Planetensatz, dritter Planetensatz und vierter Planetensatz angeordnet und bevorzugt jeweils als Minusplanetensatz ausgebildet. Es ist jedoch ebenso denkbar, an Stellen, wo es die Bindbarkeit zulässt, einzelne oder mehrere der Minusplanetensätze in Plusplanetensätze umzuwandeln, wenn gleichzeitig eine Steg- und eine Hohlradanbindung getauscht und der Betrag der Standübersetzung um Eins erhöht wird. Zudem ist auch eine anderweitige Anordnung der Planetensätze in axialer Richtung als die oben beschriebene im Rahmen der Erfindung denkbar.

Bekanntlich umfasst ein einfacher Minusplanetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plusplanetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Gemäß der Erfindung ist die Antriebswelle mit einem Steg eines zweiten Planetensatzes verbunden, dessen Sonnenrad mit einer dritten Welle und dessen Hohlrad mit einer vierten Welle gekoppelt ist. Ferner steht die Abtriebswelle mit einem Steg eines vierten Planetensatzes in Verbindung, während eine fünfte Welle mittels einer ersten Bremse am Gehäuse festsetzbar ist.

Bevorzugt dient die Antriebswelle als Antrieb des Mehrstufengetriebes, d.h. zum Einleiten eines Drehmoments in das Mehrstufengetriebe. Sie ist daher insbesondere von einem Antriebsmotor, beispielsweise einem Verbrennungs- oder Elektromotor, antreibbar. Die Abtriebswelle dient dementsprechend bevorzugt als Abtrieb des Mehrstufengetriebes, d.h. zum Abgriff eines Drehmoments von dem Mehrstufengetriebe, insbesondere zum Betreiben eines Aggregats, beispielsweise einer Pumpe oder eines elektrischen Generators, oder eines Fahrzeugantriebs, beispielsweise eines Fahrzeugrads oder einer Fahrzeuggleiskette.

Gemäß der Erfindung ist die Abtriebswelle ferner mittels einer ersten Kupplung mit der vierten Welle lösbar verbindbar, welche zudem mit einem Sonnenrad des vierten Planetensatzes in Verbindung steht. Zudem ist ein Hohlrad des vierten Planetensatzes mit einer sechsten Welle gekoppelt, die über eine zweite Kupplung mit der fünften Welle verbindbar ist.

Entsprechend einer weiteren alternativen Ausgestaltung der Erfindung ist ein Hohlrad des vierten Planetensatzes mit einer sechsten Welle verbunden, die zum einen mittels einer ersten Kupplung mit der Abtriebswelle und zum anderen über eine zweite Kupplung mit der fünften Welle verbunden werden kann. Des Weiteren steht die vierte Welle zudem mit einem Sonnenrad des vierten Planetensatzes in Verbindung.

In Weiterbildung der Erfindung ist die Abtriebswelle zudem mit einem Sonnenrad eines dritten Planetensatzes verbunden und kann mittels einer dritten Kupplung mit der dritten Welle gekoppelt werden, die ferner mit einem Steg des dritten Planetensatzes in Verbindung steht. Zudem ist ein Hohlrad des dritten Planetensatzes mit einer siebten Welle gekoppelt, welche über eine vierte Kupplung mit der fünften Welle lösbar verbindbar ist.

Gemäß einer alternativen Ausgestaltung ist die Abtriebswelle zudem mit einem Sonnenrad eines dritten Planetensatzes verbunden und kann mittels einer dritten Kupplung mit einer siebten Welle gekoppelt werden, welche des Weiteren zum einen mit einem Hohlrad des dritten Planetensatzes in Verbindung steht und zum anderen über eine vierte Kupplung mit der fünften Welle lösbar verbindbar ist. Zudem ist die dritte Welle mit einem Steg des dritten Planetensatzes gekoppelt.

Als weitere Alternative ist die dritte Welle zudem mit einem Steg eines dritten Planetensatzes verbunden und kann mittels einer dritten Kupplung mit einer siebten Welle gekoppelt werden, die zum einen mit einem Hohlrad des dritten Planetensatzes in Verbindung steht und zum anderen über eine vierte Kupplung mit der fünften Welle lösbar verbindbar ist. Des Weiteren ist die Abtriebswelle mit einem Sonnenrad des dritten Planetensatzes gekoppelt.

Entsprechend einer weiteren alternativen Ausgestaltung ist die Abtriebswelle zudem mit einem Sonnenrad eines dritten Planetensatzes verbunden und mittels einer dritten Kupplung mit der dritten Welle koppelbar, die des Weiteren über eine vierte Kupplung mit einer siebten Welle lösbar verbunden werden kann. Dabei steht diese siebte Welle mit einem Steg des dritten Planetensatzes und die fünfte Welle mit einem Hohlrad des dritten Planetensatzes in Verbindung.

Weiter alternativ hierzu kann die Abtriebswelle zudem zum einen mittels einer dritten Kupplung mit der dritten Welle und zum anderen über eine vierte Kupplung mit einer siebten Welle gekoppelt werden, die mit einem Sonnenrad eines dritten Planetensatzes in Verbindung steht. Des Weiteren ist ein Steg des dritten Planetensatzes mit der dritten Welle und ein Hohlrad des dritten Planetensatzes mit der fünften Welle gekoppelt.

In Weiterbildung der vorgenannten Ausgestaltungen ist die dritte Welle ferner mit einem Hohlrad eines ersten Planetensatzes verbunden, dessen Steg mit der fünften Welle und dessen Sonnenrad mit einer achten Welle gekoppelt ist. Diese achte Welle ist dabei über eine zweite Bremse am Gehäuse festsetzbar.

In diesem Fall ergibt sich ein erstes Übersetzungsverhältnis durch Schließen der ersten Bremse, sowie der zweiten und dritten Kupplung, wohingegen ein zweites Übersetzungsverhältnis durch Betätigen der ersten und zweiten Bremse, sowie der zweiten Kupplung geschaltet wird. Ein drittes Übersetzungsverhältnis ist durch Schließen der zweiten Bremse, sowie der zweiten und vierten Kupplung darstellbar. Des Weiteren ergibt sich ein viertes Übersetzungsverhältnis durch Betätigen der zweiten Bremse, sowie der zweiten und dritten Kupplung, und ein fünftes Übersetzungsverhältnis durch Schließen der zweiten Bremse, sowie der ersten und zweiten Kupplung. Ferner wird ein sechstes Übersetzungsverhältnis durch Betätigen der zweiten Bremse, sowie der ersten und dritten Kupplung geschaltet. Alternativ hierzu ist das sechste Übersetzungsverhältnis auch durch Schließen der ersten Bremse, sowie der ersten und dritten Kupplung oder durch Betätigen der ersten, dritten und vierten Kupplung oder durch Schließen der ersten, zweiten und vierten Kupplung oder durch Betätigen der zweiten, dritten und vierten Kupplung oder durch Schließen der ersten, zweiten und dritten Kupplung darstellbar. Ein siebtes Übersetzungsverhältnis ist durch Betätigen der zweiten Bremse, sowie der ersten und vierten Kupplung wählbar, wohingegen ein achtes Übersetzungsverhältnis durch Schließen der ersten Bremse, sowie der ersten und vierten Kupplung geschaltet wird. Schließlich ergibt sich ein neuntes Übersetzungsverhältnis durch Betätigen der ersten und zweiten Bremse, sowie der ersten Kupplung. Folglich lässt sich ein Mehrstufengetriebe mit insgesamt neun darstellbaren Gangstufen realisieren.

Entsprechend einer alternativen Weiterbildung kann die dritte Welle ferner mittels einer fünften Kupplung mit einer achten Welle gekoppelt werden, die mit einem Hohlrad eines ersten Planetensatzes in Verbindung steht. Zudem ist ein Steg des ersten Planetensatzes mit der fünften Welle verbunden und ein Sonnenrad des ersten Planetensatzes drehfest mit dem Gehäuse gekoppelt.

Weiter alternativ kann die fünfte Welle ferner mittels einer fünften Kupplung mit einer achten Welle gekoppelt werden, die mit einem Steg eines ersten Planetensatzes in Verbindung steht. Zudem ist ein Hohlrad des ersten Planetensatzes mit der dritten Welle gekoppelt und ein Sonnenrad des ersten Planetensatzes drehfest mit dem Gehäuse verbunden.

In den beiden vorgenannten Fällen ergibt sich ein erstes Übersetzungsverhältnis durch Schließen der ersten Bremse, sowie der zweiten und dritten Kupplung, wohingegen ein zweites Übersetzungsverhältnis durch Betätigen der ersten Bremse, sowie der zweiten und fünften Kupplung geschaltet wird. Ein drittes Übersetzungsverhältnis ist durch Schließen der zweiten, vierten und fünften Kupplung darstellbar. Des Weiteren ergibt sich ein viertes Übersetzungsverhältnis durch Betätigen der zweiten, dritten und fünften Kupplung, und ein fünftes Übersetzungsverhältnis durch Schließen der ersten, zweiten und fünften Kupplung. Ein sechstes Übersetzungsverhältnis ist durch Betätigen der ersten, dritten und fünften Kupplung wählbar. Alternativ hierzu ist das sechste Übersetzungsverhältnis auch durch Schließen der ersten Bremse, sowie der ersten und dritten Kupplung oder durch Betätigen der ersten, dritten und vierten Kupplung oder durch Schließen der ersten, zweiten und vierten Kupplung oder durch Betätigen der zweiten, dritten und vierten Kupplung oder durch Schließen der ersten, zweiten und dritten Kupplung darstellbar. Ferner wird ein siebtes Übersetzungsverhältnis durch Betätigen der der ersten, vierten und fünften Kupplung geschaltet, wohingegen ein achtes Übersetzungsverhältnis durch Schließen der ersten Bremse, sowie der ersten und vierten Kupplung wählbar ist. Schließlich ergibt sich ein neuntes Übersetzungsverhältnis durch Betätigen der ersten Bremse, sowie der ersten und fünften Kupplung. Dementsprechend lässt sich auch in diesem Fall ein Mehrstufengetriebe mit neun Gängen verwirklichen.

In Weiterbildung der Erfindung ergibt sich ein zusätzliches Übersetzungsverhältnis durch Schließen der ersten Bremse, sowie der zweiten und vierten Kupplung. Folglich lassen sich die vorgenannten Varianten eines Mehrstufengetriebes auf ein Getriebe mit insgesamt zehn Gangstufen erweitern.

In Weiterbildung der Erfindung ist die Antriebswelle des Mehrstufengetriebes zur Realisierung eines Nebenabtriebs insbesondere durch das Mehrstufengetriebe hindurchgeführt und dient dabei neben der Abtriebswelle als zusätzlicher zweiter Abtrieb, beispielsweise im Sinne eines Zapfwellenabtriebs für austauschbare Nebenaggregate.

Grundsätzlich umfasst die Erfindung auch Ausführungen des Mehrstufengetriebes, bei denen Antrieb und Abtrieb kinematisch gegeneinander vertauscht sind. Hierbei dient die genannte Abtriebswelle des Mehrstufengetriebes als dessen Antrieb, d.h. zum Einleiten eines Drehmoments in das Mehrstufengetriebe, beispielsweise mittels eines Antriebsmotors, und die genannte Antriebswelle des Mehrstufengetriebes dient als dessen Abtrieb, d.h. zum Abgriff eines Drehmoments von dem Mehrstufengetriebe, beispielsweise zum Betreiben eines Aggregats oder Fahrzeugantriebs. In einem Schaltschema des Mehrstufengetriebes kehrt sich die Reihenfolge der Übersetzungsverhältnisse dann entsprechend um.

Mittels der einzelnen erfindungsgemäßen Ausgestaltungen eines Mehrstufengetriebes ist es möglich, die jeweiligen Übersetzungsverhältnisse mit einer niedrigen Anzahl an Bauteilen zu realisieren und somit den Herstellungsaufwand und das Gewicht gering zu halten. Zudem ergeben sich hierbei eine insbesondere für ein Splittergetriebe einer Arbeitsmaschine geeignete nahezu geometrische Übersetzungsreihe und jeweils kleine Stufensprünge, welche ebenfalls nahezu geometrisch ausgestaltet sind.

Ferner zeichnen sich die einzelnen Ausgestaltungen des erfindungsgemäßen Mehrstufengetriebes durch niedrige Absolut- und Relativdrehzahlen, sowie niedrige Planetensatz- und Schaltelementmomente aus, was sich auf deren Dimensionierung und deren Lebensdauer positiv auswirkt. Insgesamt lassen sich zudem gute Verzahnungswirkungsgrade sowie eine kompakte Bauweise erreichen.

Die Erfindung ist nicht auf die angegebene Kombination der Merkmale des Hauptanspruchs und der abhängigen Ansprüche beschränkt. Es ergeben sich darüber hinaus Möglichkeiten, einzelne Merkmale, auch soweit sie aus den Ansprüchen, der nachfolgenden Beschreibung der Ausführungsbeispiele oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

Weitere, die Erfindung verbessernde Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: eine schematische Ansicht einer weiteren, dritten bevorzugten Ausgestaltung eines nicht beanspruchten Mehrstufengetriebes:
- Fig. 5: eine schematische Ansicht einer vierten bevorzugten Ausführungsform eines erfindungsgemäßen Mehrstufengetriebes;
- Fig. 6: eine schematische Darstellung einer fünften bevorzugten Ausgestaltung eines erfindungsgemäßen Mehrstufengetriebes;
- Fig. 7: eine schematische Ansicht einer weiteren, sechsten bevorzugten Ausführungsform eines erfindungsgemäßen Mehrstufengetriebes;
- Fig. 8: eine schematische Ansicht einer siebten bevorzugten Ausführungsform;
- Fig. 9: eine weitere, schematische Darstellung einer achten bevorzugten Ausgestaltung eines erfindungsgemäßen Mehrstufengetriebes;
- Fig. 10: eine weitere, schematische Darstellung einer neunten bevorzugten Ausgestaltung der Erfindung;
- Fig. 11: eine schematische Ansicht einer weiteren, zehnten bevorzugten Ausführungsform eines erfindungsgemäßen Mehrstufengetriebes;
- Fig. 12: eine schematische Ansicht einer elften Ausgestaltung eines erfindungsmäßen Mehrstufengetriebes;
- Fig. 13: eine weitere, schematische Darstellung einer zwölften bevorzugten Ausführungsform eines erfindungsgemäßen Mehrstufengetriebes;
- Fig. 14: eine schematische Darstellung einer dreizehnten bevorzugten Ausführungsform eines erfindungsgemäßen Mehrstufengetriebes;
- Fig. 15: eine schematische Darstellung einer weiteren, vierzehnten bevorzugten Ausgestaltung eines Mehrstufengetriebes;
- Fig. 16: eine weitere, schematische Darstellung einer fünfzehnten bevorzugten Ausführungsform eines erfindungsgemäßen Mehrstufengetriebes;
- Fig. 17: eine schematische Darstellung einer sechzehnten bevorzugten Ausführung der Erfindung; und
- Fig. 18: eine schematische Ansicht einer siebzehnte bevorzugten Ausgestaltung eines erfindungsgemäßen Mehrstufengetriebes.

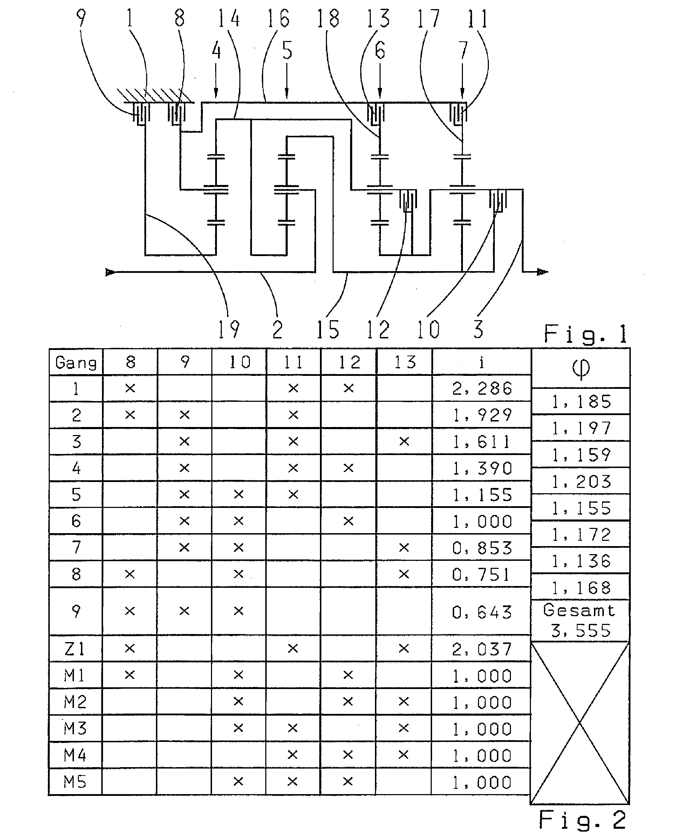

In Fig. 1 ist eine erste bevorzugte Ausführungsform eines erfindungsgemäßen Mehrstufengetriebes dargestellt. Bei diesem handelt es sich bevorzugt um ein Splittergetriebe eines Gesamtgetriebes einer Arbeitsmaschine, wobei ein derartiges Splittergetriebe innerhalb des Gesamtgetriebes üblicherweise als Lastschaltgetriebe in Kombination mit einem Gruppengetriebe verwendet wird, so dass durch diese Kombination des Splittergetriebes mit jeweils niedrigen Stufensprüngen mit dem Gruppengetriebe mit jeweils hohen Stufensprüngen eine große Anzahl an darstellbaren Übersetzungsverhältnissen und eine große Spreizung des Gesamtgetriebes erreichbar ist. Aufgrund dieser hohen Anzahl an darstellbaren Gangstufen eignet sich ein entsprechend aufgebautes Gesamtgetriebe insbesondere für die Anwendung bei einer landwirtschaftlichen Arbeitsmaschine, bevorzugt einem Ackerschlepper. Des Weiteren erfolgt auch bevorzugt eine weitere Kombination der beiden vorgenannten Getriebeeinheiten mit einer Kriechgang- und/oder einer Wendeeinheit. Dabei ist eine geometrische Reihenfolge der einzelnen Getriebeeinheiten im Gesamtgetriebe prinzipiell frei wählbar.

Wie des Weiteren aus Fig. 1 ersichtlich ist, verfügt das erfindungsgemäße Mehrstufengetriebe über ein Gehäuse 1, welches eine Antriebswelle 2, eine Abtriebswelle 3, sowie vier Planetensätze 4, 5, 6 und 7 aufnimmt. Die Planetensätze 4, 5, 6 und 7 sind hierbei jeweils als Minusplanetensätze ausgebildet, wobei aber erfindungsgemäße ebenso gut eine Ausbildung zumindest eines der Minusplanetensätze als Plusplanetensatz denkbar ist. Hierbei ist dann gleichzeitig eine Steg- und eine Hohlradanbindung miteinander zu tauschen und der Betrag der Standübersetzung im Vergleich zu der Ausführung als Minusplanetensatz um Eins zu erhöhen. Vorliegend sind die Planetensätze 4, 5, 6 und 7 axial betrachtet in der Reihenfolge 4, 5, 6, 7 angeordnet. Es ist im Rahmen der Erfindung jedoch auch eine anderweitige Anordnung in axialer Richtung denkbar.

Wie ferner aus Fig. 1 hervorgeht, umfasst das erfindungsgemäße Mehrstufengetriebe insgesamt sechs Schaltelemente, welche sich aus zwei Bremsen 8 und 9 und vier Kupplungen 10, 11, 12 und 13 zusammensetzen. Eine räumliche Anordnung dieser Schaltelemente kann dabei beliebig sein und wird nur durch deren Abmessungen, sowie die äußere Formgebung begrenzt. Im vorliegenden Fall sind die Bremsen 8 und 9 und die Kupplungen 10, 11, 12 und 13 jeweils als Lamellenschaltelemente ausgeführt, wobei erfindungsgemäß aber ebenso gut auch eine Ausführung als formschlüssige Schaltelemente oder als anderweitig ausgebildete reibschlüssige Schaltelemente denkbar ist.

Mittels einer gezielten Betätigung der Schaltelemente ist ein selektives Schalten verschiedener Übersetzungsverhältnisse zwischen der Antriebswelle 2 und der Abtriebswelle 3 möglich. Zudem sind in dem Gehäuse 1 insgesamt acht drehbare Wellen aufgenommen, welche neben der Antriebswelle 2 und der Abtriebswelle 3 durch eine dritte Welle 14, eine vierte Welle 15, eine fünfte Welle 16, eine sechste Welle 17, eine siebte Welle 18 und eine achte Welle 19 gebildet sind.

Erfindungsgemäß verbindet die Abtriebswelle 3 einen Steg des vierten Planetensatzes 7 mit einem Sonnenrad des dritten Planetensatzes 6 und kann ferner zum einen mittels der ersten Kupplung 10 mit der vierten Welle 15 und zum anderen über dritte Kupplung 12 mit der dritten Welle 14 gekoppelt werden. Die dritte Welle 14 ist im weiteren Verlauf mit einem Steg des dritten Planetensatzes 6, einem Sonnenrad des zweiten Planetensatzes 5 und einem Hohlrad des ersten Planetensatzes 4 verbunden, während die vierte Welle 15 zudem ein Sonnenrad des vierten Planetensatzes 7 mit einem Hohlrad des zweiten Planetensatzes 5 koppelt.

Des Weiteren ist die fünfte Welle 16 mit einem Steg des ersten Planetensatzes 4 verbunden und kann über die erste Bremse 8 am Gehäuse 1 festgesetzt werden. Ferner ist die fünfte Welle 16 noch über die zweite Kupplung 11 mit der sechsten Welle 17 und mittels der vierten Kupplung 13 mit der siebten Welle 18 lösbar verbindbar. Dabei steht die sechste Welle 17 im weiteren Verlauf mit einem Hohlrad des vierten Planetensatzes 7 und die siebte Welle 18 mit einem Hohlrad des dritten Planetensatzes 6 in Verbindung. Wie zudem aus Fig. 1 hervorgeht, ist die achte Welle 19 mit einem Sonnenrad des ersten Planetensatzes 4 gekoppelt und kann über die zweite Bremse 9 am Gehäuse 1 festgesetzt werden. Schließlich ist noch die Antriebswelle 2 mit einem Steg des zweiten Planetensatzes 5 gekoppelt.

Aus Fig. 2 geht ein beispielhaftes Schaltschema eines Mehrstufengetriebes gemäß Fig. 1 hervor, wobei hierbei zur Darstellung jedes einzelnen Übersetzungsverhältnisses drei der sechs Schaltelemente geschlossen sind und zum Schalten in eine jeweils benachbarte Gangstufe der Zustand zweiter Schaltelemente zu verändern ist. Hierbei können aus dem beispielhaften Schaltschema die jeweiligen Übersetzungen i in den einzelnen Gängen sowie die sich ergebenden Gangsprünge ϕ zum jeweils benachbarten Übersetzungsverhältnis beispielhaft entnommen werden. Prinzipiell ist die Höhe der einzelnen Übersetzungen über die Höhe der Standübersetzungen der Planetensätze 4, 5, 6 und 7 frei wählbar, wobei bevorzugt der erste Planetensatz 4 eine Standübersetzung von -2,300, der zweite Planetensatz 5 eine Standübersetzung von -1800, der dritte Planetensatz 6 eine Standübersetzung von -2,300 und der vierte Planetensatz 7 eine Standübersetzung von -2,000 aufweist. Zudem geht eine bevorzugte Spreizung des Getriebes von 3,555 aus Fig. 2 hervor.

Wie des Weiteren aus Fig. 2 ersichtlich ist, lassen sich mit dem erfindungsgemäßen Mehrstufengetriebe gemäß Fig. 1 insgesamt 9 reguläre Übersetzungsverhältnisse, sowie ein zusätzliches, mit Z1 bezeichnetes Übersetzungsverhältnis realisieren. Zudem lässt sich ein sechstes Übersetzungsverhältnis durch mehrere alternative Betätigungen der Schaltelemente darstellen, welche in Fig. 2 mit M1 bis M5 bezeichnet sind.

Hierbei ergibt sich ein erstes Übersetzungsverhältnis durch Schließen der ersten Bremse 8, sowie der zweiten Kupplung 11 und der dritten Kupplung 12, wobei zum Schalten in das nächste, zweite Übersetzungsverhältnis die dritte Kupplung 12 zu öffnen und die zweite Bremse 9 zu betätigen ist. Ein sich an das zweite Übersetzungsverhältnis anschließendes drittes Übersetzungsverhältnis wird ausgehend vom zweiten Übersetzungsverhältnis durch Lösen der ersten Bremse 8 und Schließen der vierten Kupplung 13 geschaltet. Ausgehend vom dritten Übersetzungsverhältnis ergibt sich ein viertes Übersetzungsverhältnis, indem die vierte Kupplung 13 wiederum geöffnet und die dritte Kupplung 12 betätigt wird, wobei zum weiteren Hochschalten in ein fünftes Übersetzungsverhältnis die dritte Kupplung 12 dann wieder gelöst und die erste Kupplung 10 betätigt wird. Das daran anschließende, sechste Übersetzungsverhältnis wird dann durch Öffnen der zweiten Kupplung 11 und Schließen der dritten Kupplung 12 geschaltet. Das sechste Übersetzungsverhältnis ist nun alternativ hierzu auch durch Betätigen der ersten Bremse 8, sowie der ersten Kupplung 10 und der dritten Kupplung 12 oder durch Schließen der ersten Kupplung 10, der dritten Kupplung 12 und der vierten Kupplung 13 oder durch Betätigen der ersten Kupplung 10, der zweiten Kupplung 11 und der vierten Kupplung 13 oder durch Schließen der zweiten Kupplung 11, der dritten Kupplung 12 und der vierten Kupplung 13 oder durch Betätigen der ersten Kupplung 10, der zweiten Kupplung 11 und der dritten Kupplung 12 darstellbar.

Des Weiteren ergibt sich ein siebtes Übersetzungsverhältnis durch Schließen der zweiten Bremse 9, sowie der ersten Kupplung 10 und der vierten Kupplung 13. Ein achtes Übersetzungsverhältnis ist darstellbar, indem ausgehend vom siebten Übersetzungsverhältnis die zweite Bremse 9 geöffnet und die erste Bremse 8 betätigt wird. Schließlich wird ein neuntes Übersetzungsverhältnis ausgehend vom achten Übersetzungsverhältnis durch Öffnen der vierten Kupplung 13 und Betätigen der zweiten Bremse 9 geschaltet.

Das zusätzliche, mit Z1 bezeichnete Übersetzungsverhältnis ist darstellbar, indem die erste Bremse 8, sowie die zweite Kupplung 11 und die vierte Kupplung 13 geschlossen werden. Allerdings ist dieses zusätzliche Übersetzungsverhältnis nur optional vorzusehen, da der zusätzliche Gang zu nicht mehr geometrischen Stufensprüngen über die Übersetzungsreihe führt.

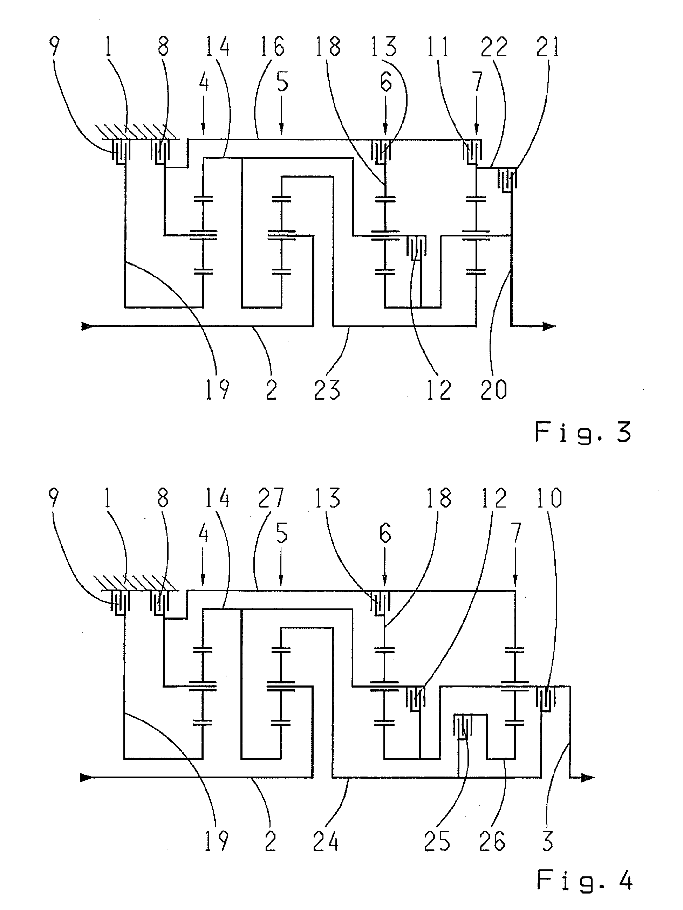

In Fig. 3 ist eine schematische Ansicht einer weiteren, zweiten bevorzugten Ausführungsform eines Mehrstufengetriebes dargestellt. Im Unterschied zu der Ausgestaltung gemäß Fig. 1 kann eine Abtriebswelle 20 in diesem Fall, neben einer Verbindung mit dem Steg des vierten Planetensatzes 7 und dem Sonnenrad des dritten Planetensatzes 6, sowie der möglichen Kopplung mit der dritten Welle 14 über die dritte Kupplung 12, mittels einer ersten Kupplung 21 mit einer sechsten Welle 22 verbunden werden. Diese sechste Welle 22 steht dabei zudem mit dem Hohlrad des vierten Planetensatzes 7 in Verbindung und ist mittels der zweiten Kupplung 11 an die fünfte Welle 16 ankoppelbar. Zudem verbindet eine vierte Welle 23 lediglich das Sonnenrad des vierten Planetensatzes 7 mit dem Hohlrad des zweiten Planetensatzes 5.

Der Aufbau gemäß der zweiten Ausführungsform nach Fig. 3 ist hierbei wirkungsgleich zu dem der vorherigen Ausgestaltung gemäß Fig. 1, so dass in den einzelnen Gangstufen bei gleichen Standübersetzungen der Planetensätze 4 bis 7 die Übersetzungen i, sowie die Gangsprünge ϕ gemäß dem beispielhaften Schaltschema aus Fig. 2 erreicht werden. Die Schaltung der einzelnen Übersetzungsverhältnisse unterscheidet sich zu der Beschreibung zu Fig. 2 nur dahingehend, dass anstelle der ersten Kupplung 10 in Fig. 1 jeweils die erste Kupplung 21 in Fig. 3 zu betätigen ist.

Aus Fig. 4 geht eine dritte bevorzugte Ausgestaltung eines nicht beanspruchten Mehrstufengetriebes hervor. Unterschiedlich zu der Variante nach Fig. 1 ist hierbei, dass eine vierte Welle 24, neben einer Verbindung mit dem Hohlrad des zweiten Planetensatzes 5 und einer Verbindbarkeit mit der Abtriebswelle 3 über die erste Kupplung 10, mittels einer zweiten Kupplung 25 mit einer sechsten Welle 26 gekoppelt werden kann, die im weiteren Verlauf mit dem Sonnenrad des vierten Planetensatzes 7 in Verbindung steht. Zudem ist eine fünfte Welle 27 direkt mit dem Hohlrad des vierten Planetensatzes 7 gekoppelt.

Auch die Ausgestaltung der Fig. 4 stellt eine wirkungsgleiche Getriebevariante zu der Ausführungsform nach Fig. 1 dar. Aufgrund dieser Tatsache werden bei gleichen Standübersetzungen der Planetensätze 4 bis 7 erneut die in Fig. 2 angegebenen Übersetzungen i sowie die Gangsprünge ϕ erzielt. Hinsichtlich des Schaltens der einzelnen Gangstufen ist das Beschriebene zu Fig. 2 dahingehend abzuwandeln, dass anstelle der zweiten Kupplung 11 in Fig. 1 jeweils die zweite Kupplung 25 in Fig. 4 zu betätigen ist.

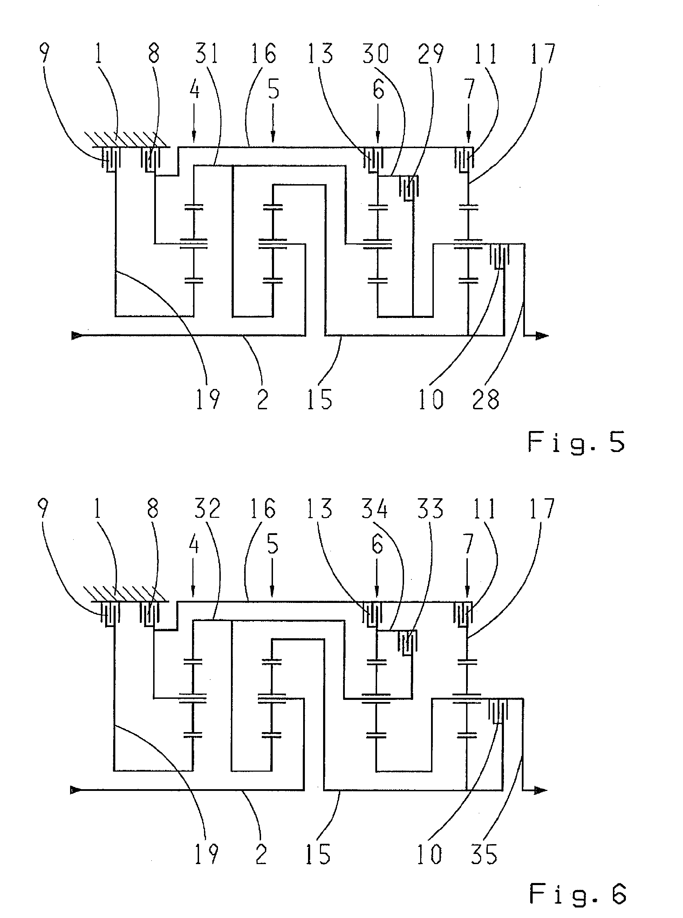

Fig. 5 zeigt eine weitere, vierte Ausführungsform eines erfindungsgemäßen Mehrstufengetriebes. Als Unterschied zu der Ausgestaltung nach Fig. 1 ist hierbei eine Abtriebswelle 28 zudem über eine dritte Kupplung 29 mit einer siebten Welle 30 verbindbar, welche im weiteren Verlauf mit dem Hohlrad des dritten Planetensatzes 6 in Verbindung steht und über die vierte Kupplung 13 mit der fünften Welle 16 koppelbar ist. Ferner verbindet eine dritte Welle 31 lediglich den Steg des dritten Planetensatzes 6, das Sonnenrad des zweiten Planetensatzes 5 und das Hohlrad des ersten Planetensatzes 4 miteinander.

Die Ausgestaltung gemäß Fig. 5 stellt ebenfalls wieder eine wirkungsgleiche Ausführung eines Mehrstufengetriebes zu der Variante nach Fig. 1 dar. Folglich ist das Getriebeschemata nach Fig. 2 auch für die Ausgestaltung gemäß Fig. 5 anwendbar, wobei hinsichtlich der Schaltung der einzelnen Übersetzungsverhältnisse die Betätigung der dritten Kupplung 12 in Fig. 1 durch eine Betätigung der dritten Kupplung 29 in Fig. 5 jeweils zu ersetzen ist.

Des Weiteren geht aus Fig. 6 eine fünfte Ausgestaltung eines erfindungsgemäßen Mehrstufengetriebes hervor. Wie zu erkennen ist, unterscheidet sich diese Ausgestaltung zu der Variante gemäß Fig. 1 dahingehend, dass eine dritte Welle 32, neben einer Verbindung mit dem Hohlrad des ersten Planetensatzes 4, dem Sonnenrad des zweiten Planetensatzes 5 und dem Steg des dritten Planetensatzes 6, über eine dritte Kupplung 33 mit einer siebten Welle 34 gekoppelt werden kann. Diese siebte Welle 34 ist dabei im weiteren Verlauf mit dem Hohlrad des dritten Planetensatzes 6 verbunden und mittels der vierten Kupplung 13 mit der fünften Welle 16 koppelbar. Zudem ist eine Abtriebswelle 35 lediglich mit dem Sonnenrad des dritten Planetensatzes 6 und dem Steg des vierten Planetensatzes 7 verbunden und mittels der ersten Kupplung 10 mit der vierten Welle 15 koppelbar.

Eine Schaltung der Übersetzungsverhältnisse der erneut zu Fig. 1 wirkungsgleichen Getriebevariante nach Fig. 6 unterscheidet sich zu dem beschriebenen zu Fig. 2 nur dahingehend, dass anstelle der dritten Kupplung 12 in Fig. 1 jeweils die dritte Kupplung 33 in Fig. 6 zu betätigen ist.

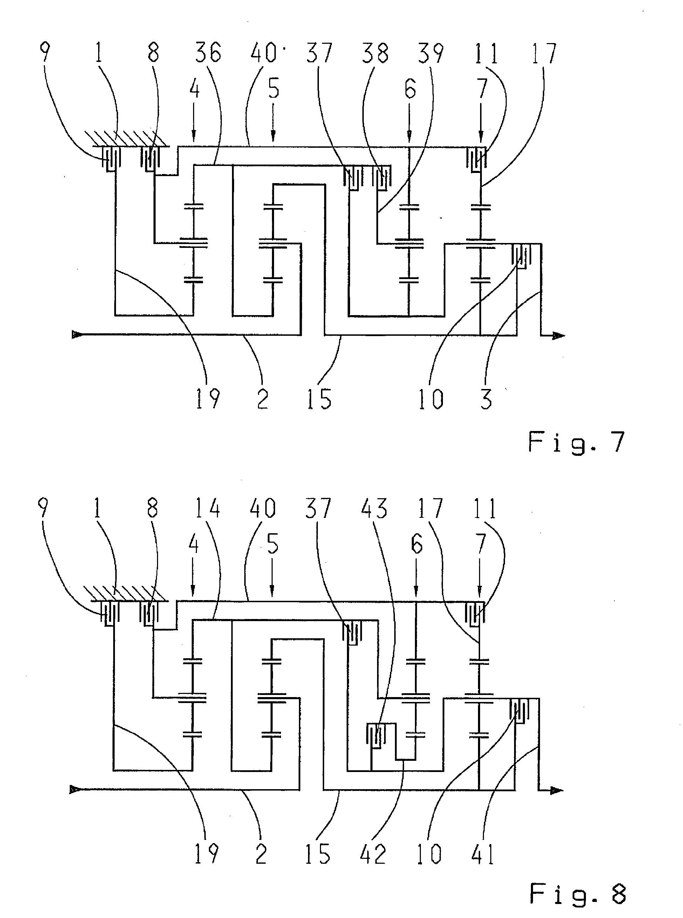

Ferner ist in Fig. 7 eine sechste bevorzugte Ausführungsform eines erfindungsgemäßen Mehrstufengetriebes dargestellt. Im Unterschied zu der Ausgestaltung nach Fig. 1 ist eine dritte Welle 36, neben einer Verbindung mit dem Hohlrad des ersten Planetensatzes 4 und den Sonnenrad des zweiten Planetensatzes 5, mittels einer dritten Kupplung 37 mit der Abtriebswelle 3 lösbar verbindbar. Dabei ist die dritte Kupplung 37 in axialer Richtung zwischen dem zweiten Planetensatz 5 und dem dritten Planetensatz 6 angeordnet. Ferner kann die dritte Welle 36 mittels einer vierten Kupplung 38 mit einer siebten Welle 39 verbunden werden, die mit dem Steg des dritten Planetensatzes 6 gekoppelt ist. Zudem steht eine fünfte Welle 40 starr mit dem Hohlrad des dritten Planetensatzes 6 in Verbindung.

Auch die Variante gemäß Fig. 7 stellt wiederum eine wirkungsgleiche Getriebeausführung zu der Ausführungsform nach Fig. 1 dar, so dass das beispielhafte Schaltschema nach Fig. 2 prinzipiell auch für die Fig. 7 heranzuziehen ist. Allerdings ist dieses Schaltschema bezüglich der Schaltung der einzelnen Übersetzungsverhältnisse dahingehend abzuwandeln, dass anstelle der dritten Kupplung 12 in Fig. 1 jeweils die dritte Kupplung 37 in Fig. 7 und anstelle der vierten Kupplung 13 in Fig. 1 jeweils die vierte Kupplung 38 in Fig. 7 zu betätigen ist.

Des Weiteren ist in Fig. 8 eine siebte Ausgestaltung eines erfindungsgemäßen Mehrstufengetriebes dargestellt. Diese unterscheidet sich zu der Ausführungsform nach Fig. 1 dahingehend, dass zwischen dem Sonnenrad des dritten Planetensatzes 6 und einer Abtriebswelle 41 eine siebte Welle 42 platziert ist, welche mit dem Sonnenrad des dritten Planetensatzes 6 in Verbindung steht und mittels einer vierten Kupplung 43 mit der Abtriebswelle 41 verbunden werden kann. Zudem ist eine Ankopplung der Abtriebswelle 41 an die dritte Welle 14 über eine dritte Kupplung 37 zwischen den zweiten Planetensatz 5 und den dritten Planetensatz 6 verlegt. Zudem ist eine fünfte Welle 40 starr mit dem Hohlrad des dritten Planetensatzes 6 gekoppelt.

Bezüglich einer Schaltung der Gangstufen des Mehrstufengetriebes gemäß Fig. 8 ist das beispielhafte Schaltschema nach Fig. 2 dahingehend abzuwandeln, dass anstelle der dritten Kupplung 12 in Fig. 1 jeweils die dritte Kupplung 37 in Fig. 8 und anstelle der vierten Kupplung 13 in Fig. 1 jeweils die vierte Kupplung 43 in Fig. 8 zu betätigen ist. Die erreichbaren Übersetzungen i und die Gangsprünge ϕ entsprechen dabei bei gleichen Standübersetzungen der Planetensätze 4 bis 7 erneut den ablesbaren Werten aus Fig. 2.

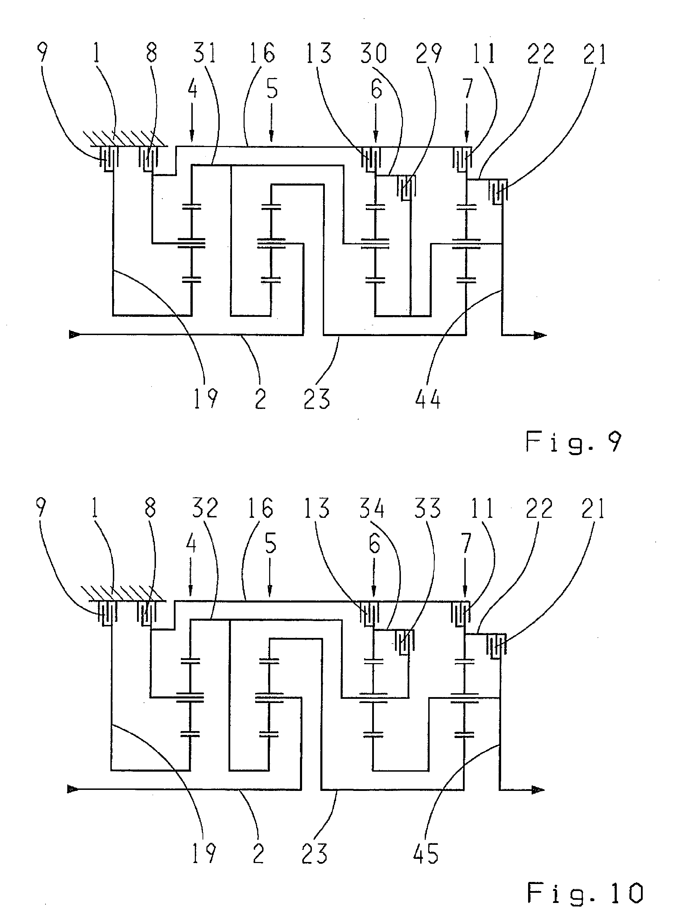

Eine weitere, achte bevorzugte Ausführungsform eines erfindungsgemäßen Mehrstufengetriebes geht aus Fig. 9 hervor. Im Unterschied zu der Ausgestaltung gemäß Fig. 1 kann eine Abtriebswelle 44, neben einer Verbindung mit dem Steg des vierten Planetensatzes 7 und dem Sonnenrad des dritten Planetensatzes 6, zum Einen mittels einer ersten Kupplung 21 mit einer sechsten Welle 22 und zum anderen über eine dritte Kupplung 29 mit einer siebten Welle 30 gekoppelt werden. Die sechste Welle 22 ist dabei im weiteren Verlauf mit dem Hohlrad des vierten Planetensatzes 7 gekoppelt und mittels der zweiten Kupplung 11 mit der fünften Welle 16 verbindbar. Die siebte Welle 30 steht mit dem Hohlrad des dritten Planetensatzes 6 in Verbindung und kann über die vierte Kupplung 13 an die fünfte Welle 16 gekoppelt werden. Ferner ist eine dritte Welle 31 lediglich mit dem Hohlrad des ersten Planetensatzes 4, dem Sonnenrad des zweiten Planetensatzes 5 und dem Steg des dritten Planetensatzes 6 verbunden. Zudem koppelt eine vierte Welle 23 lediglich das Hohlrad des zweiten Planetensatzes 5 mit dem Sonnenrad des vierten Planetensatzes 7.

Auch die Ausgestaltung gemäß Fig. 9 ist wiederum wirkungsgleich zu der Getriebevariante nach Fig. 1, wobei bezüglich einer Schaltung der einzelnen Übersetzungsverhältnisse anstelle der ersten Kupplung 10 in Fig. 1 jeweils die erste Kupplung 21 in Fig. 9 und anstelle der dritten Kupplung 12 in Fig. 1 jeweils die dritte Kupplung 29 in Fig. 9 zu betätigen ist.

Zudem geht aus Fig. 10 eine neunte bevorzugte Ausgestaltung eines erfindungsgemäßen Mehrstufengetriebes hervor. Diese unterscheidet sich dabei von Fig. 1 dahingehend, dass eine dritte Welle 32, neben einer Verbindung mit dem Hohlrad des ersten Planetensatzes 4, mit dem Sonnenrad des zweiten Planetensatzes 5 und dem Steg des dritten Planetensatzes 6, über eine dritte Kupplung 33 mit einer siebten Welle 34 gekoppelt werden kann. Diese siebte Welle 34 steht dabei, wie schon bei Fig. 1, mit dem Hohlrad des dritten Planetensatzes 6 in Verbindung und ist mittels der vierten Kupplung 13 mit der fünften Welle 16 koppelbar. Zudem verbindet eine Abtriebswelle 45 das Sonnenrad des dritten Planetensatzes 6 mit dem Steg des vierten Planetensatzes 7 und kann über eine erste Kupplung 21 mit einer sechsten Welle 22 gekoppelt werden. Die sechste Welle 22 ist im weiteren Verlauf, ebenso wie schon bei Fig. 1, mit dem Hohlrad des vierten Planetensatzes 7 verbunden und über eine zweite Kupplung 11 mit der fünften Welle 16 koppelbar. Des Weiteren ist eine vierte Welle 23 lediglich mit dem Hohlrad des zweiten Planetensatzes 5 und dem Sonnenrad des vierten Planetensatzes 7 verbunden.

Bezüglich einer Schaltung der einzelnen Gangstufen der zu Fig. 1 wirkungsgleichen Getriebevariante gemäß Fig. 10 ist das beispielhafte Schaltschema nach Fig. 2 dahingehend abzuwandeln, dass anstelle der ersten Kupplung 10 in Fig. 1 jeweils die erste Kupplung 21 in Fig. 10 und anstelle der dritten Kupplung 12 in Fig. 1 jeweils die dritte Kupplung 33 in Fig. 10 zu betätigen ist.

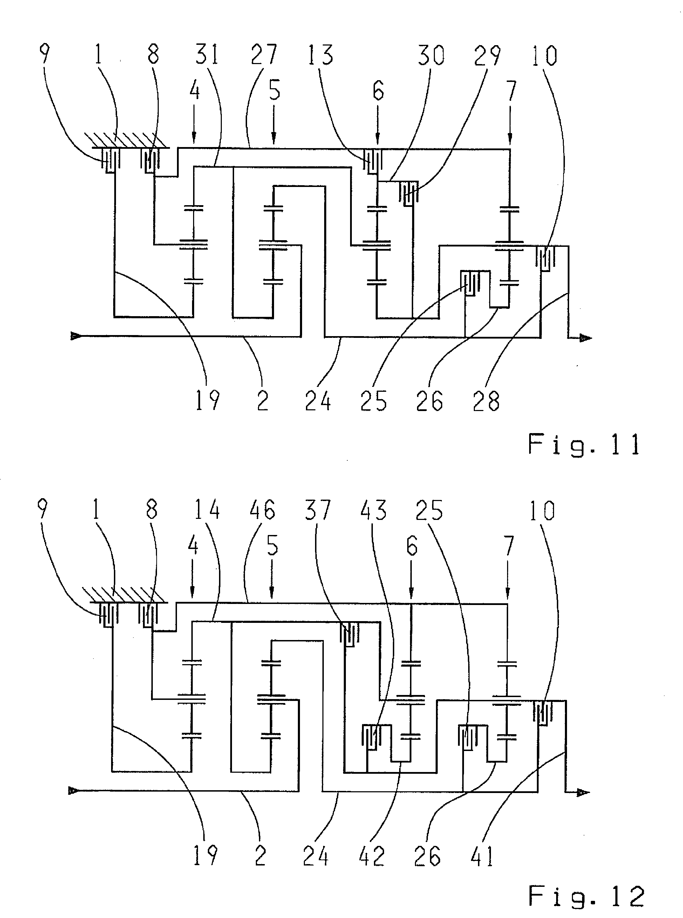

In Fig. 11 ist des Weiteren eine zehnte Ausführungsform eines erfindungsgemäßen Mehrstufengetriebes dargestellt. Unterschiedlich zu der Variante nach Fig. 1 ist hierbei, dass zwischen dem Sonnenrad des vierten Planetensatzes 7 und einer vierten Welle 24 eine sechste Welle 26 platziert ist, die zum einen mit dem Sonnenrad des vierten Planetensatzes 7 in Verbindung steht und zum anderen mittels einer zweiten Kupplung 25 mit der vierten Welle 24 koppelbar ist. Zudem ist eine Abtriebswelle 28, neben einer Verbindung mit dem Sonnenrad des dritten Planetensatzes 6 und einer möglichen Ankopplung an die vierte Welle 24 mittels der ersten Kupplung 10, zudem über eine dritte Kupplung 29 mit einer siebten Welle 30 lösbar verbindbar, welche im weiteren Verlauf, wie bei Fig. 1, mit dem Hohlrad des dritten Planetensatzes 6 und der vierten Kupplung 13 verbunden ist. Zudem ist eine fünfte Welle 27 direkt mit dem Hohlrad des vierten Planetensatzes 7 gekoppelt. Schließlich ist noch eine dritte Welle 31 lediglich mit dem Hohlrad des ersten Planetensatzes 4, dem Sonnenrad des zweiten Planetensatzes 5 und dem Steg des dritten Planetensatzes 6 verbunden.

Auch bei der Variante nach Fig. 11 kann das beispielhafte Schaltschema nach Fig. 2 weitestgehend verwendet werden, wobei dieses dahingehend abzuwandeln ist, dass anstelle der zweiten Kupplung 11 in Fig. 1 jeweils die zweite Kupplung 25 in Fig. 11 und anstelle der dritten Kupplung 12 in Fig. 1 jeweils die dritte Kupplung 29 in Fig. 11 zu betätigen ist.

Eine weitere, elfte Ausführungsform eines Erfindungsgemäßen Mehrstufengetriebes geht aus Fig. 12 hervor. Im Unterschied zu der Ausgestaltung nach Fig. 1 ist in diesem Fall, wie schon bei Fig. 11, zwischen dem Sonnenrad des vierten Planetensatzes 7 und einer vierten Welle 24 eine sechste Welle 26 platziert, die zum Einen mit dem Sonnenrad des vierten Planetensatzes 7 verbunden und zum anderen über eine zweite Kupplung 25 mit der vierten Welle 24 gekoppelt werden kann. Zudem ist eine Abtriebswelle 41, neben einer Verbindung mit dem Steg des vierten Planetensatzes 7 und einer möglichen Ankopplung an die vierte Welle 24 mittels der ersten Kupplung 10, über eine dritte Kupplung 37 mit der dritten Welle 14 und mittels einer vierten Kupplung 43 mit einer siebten Welle 42 jeweils lösbar verbindbar. Die siebte Welle 42 steht im weiteren Verlauf mit dem Sonnenrad des dritten Planetensatzes 6 in Verbindung. Des Weiteren ist noch eine fünfte Welle 46 jeweils starr mit dem Hohlrad des dritten Planetensatzes 6 und dem Hohlrad des vierten Planetensatzes 7 verbunden.

Auch die elfte bevorzugte Ausführungsform stellt wiederum eine wirkungsgleiche Getriebevariante zu der Ausgestaltung nach Fig. 1 dar. Dementsprechend ist auch das beispielhafte Schaltschema nach Fig. 2 auf die Ausführungsform nach Fig. 12 anwendbar, wobei dieses lediglich dahingehend abzuwandeln ist, das anstelle der zweiten Kupplung 11 in Fig. 1 jeweils die zweite Kupplung 25 in Fig. 12, anstelle der dritten Kupplung 12 in Fig. 1 jeweils die dritte Kupplung 37 in Fig. 12 und anstelle der vierten Kupplung 13 in Fig. 1 jeweils die vierte Kupplung 43 in Fig. 12 zu betätigen ist.

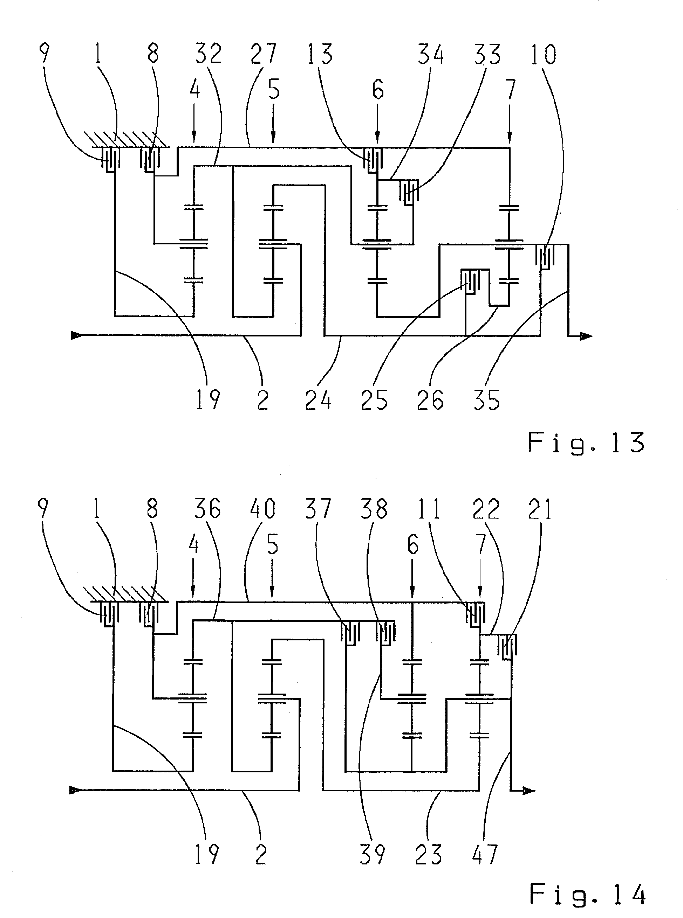

In Fig. 13 ist eine zwölfte bevorzugte Ausgestaltung eines erfindungsgemäßen Mehrstufengetriebes dargestellt. Unterschiedlich zu der Variante nach Fig. 1 ist hierbei, dass zwischen dem Sonnenrad des vierten Planetensatzes 7 und einer vierten Welle 24 eine sechste Welle 26 platziert ist, die mit dem Sonnenrad des vierten Planetensatzes 7 in Verbindung steht und über eine zweite Kupplung 25 mit der vierten Welle 24 gekoppelt werden kann. Zudem kann eine dritte Welle 32 mittels einer dritten Kupplung 33 mit einer siebten Welle 34 verbunden werden, welche zum Einen mit dem Hohlrad des dritten Planetensatzes 6 und zum Anderen mit der vierten Kupplung 13 gekoppelt ist. Eine fünfte Welle 27 ist ferner starr mit dem Hohlrad des vierten Planetensatzes 7 verbunden, während eine Abtriebswelle 35, neben einer Koppelbarkeit mit der vierten Welle 24 über die erste Kupplung 10, lediglich mit dem Sonnenrad des dritten Planetensatzes 6 und dem Steg des vierten Planetensatzes 7 verbunden ist.

Auch die Variante nach Fig. 13 stellt wiederum eine wirkungsgleiche Ausgestaltung eines Mehrstufengetriebes zu Fig. 1 dar. Dabei ist hinsichtlich des Schaltens der einzelnen Gangstufen das Schaltschema nach Fig. 2 derart abzuwandeln, dass anstelle der zweiten Kupplung 11 in Fig. 1 jeweils die zweite Kupplung 25 in Fig. 13 und anstelle der dritten Kupplung 12 in Fig. 1 jeweils die dritte Kupplung 33 in Fig. 13 zu betätigen ist.

Des Weiteren ist in Fig. 14 eine weitere, dreizehnte bevorzugte Ausgestaltung eines erfindungsgemäßen Mehrstufengetriebes dargestellt. Diese unterscheidet sich von der Variante gemäß Fig. 1 dahingehend, dass eine Abtriebswelle 47, neben einer Verbindung mit dem Steg des vierten Planetensatzes 7 und dem Sonnenrad des dritten Planetensatzes 6, über eine erste Kupplung 21 mit einer sechsten Welle 22 verbunden werden kann, die mit dem Hohlrad des vierten Planetensatzes 7 und der zweiten Kupplung 11 gekoppelt ist. Zudem ist die Abtriebswelle 47 mittels einer dritten Kupplung 37 mit einer dritten Welle 36 lösbar verbindbar. Diese dritte Welle 36 verbindet dabei das Hohlrad des ersten Planetensatzes 4 mit dem Sonnenrad des zweiten Planetensatzes 5 und kann des Weiteren mittels einer vierten Kupplung 38 mit einer siebten Welle 39 gekoppelt werden, die im weiteren Verlauf mit einem Steg des dritten Planetensatzes 6 in Verbindung steht. Ferner verbindet eine vierte Welle 23 lediglich das Hohlrad des zweiten Planetensatzes 5 mit dem Sonnenrad des vierten Planetensatzes 7. Schließlich ist noch eine fünfte Welle 40 starr mit dem Hohlrad des dritten Planetensatzes 6 verbunden.

Auch das Mehrstufengetriebe gemäß Fig. 14 ist wiederum wirkungsgleich ausgestaltet zu der Getriebevariante nach Fig. 1. Dementsprechend ist auch in diesem Fall wiederum das beispielhafte Schaltschema nach Fig. 2 heranziehbar, wobei bezüglich der Schaltung der einzelnen Gangstufen dieses dahingehend zu verändern ist, dass anstatt der ersten Kupplung 10 in Fig. 1 jeweils die erste Kupplung 21 in Fig. 14, anstelle der dritten Kupplung 12 in Fig. 1 jeweils die dritte Kupplung 37 und anstelle der vierten Kupplung 13 in Fig. 1 jeweils die vierte Kupplung 38 in Fig. 14 zu betätigen ist.

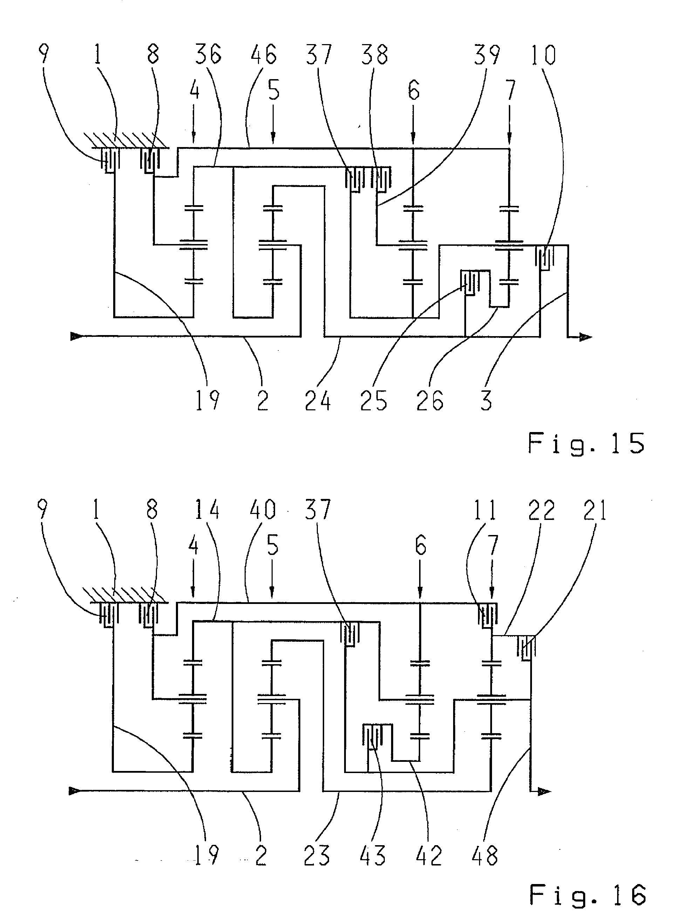

Eine weitere, vierzehnte Ausgestaltung der Erfindung geht aus Fig. 15 hervor. Diese unterscheidet sich von dem Mehrstufengetriebe gemäß Fig. 1 dadurch, dass zwischen dem Sonnenrad des vierten Planetensatzes 7 und einer vierten Welle 24 eine sechste Welle 26 platziert ist, die zum einen mit dem Sonnenrad des vierten Planetensatzes 7 verbunden und zum anderen über eine zweite Kupplung 25 mit der vierten Welle 24 koppelbar ist. Des Weiteren verbindet eine dritte Welle 36 das Hohlrad des ersten Planetensatzes 4 mit dem Sonnenrad des zweiten Planetensatzes 5 und kann zum Einen mittels einer dritten Kupplung 37 mit der Abtriebswelle 3 und zum Anderen über eine vierte Kupplung mit einer siebten Welle 39 gekoppelt werden. Diese siebte Welle 39 steht im weiteren Verlauf mit dem Steg des dritten Planetensatzes 6 in Verbindung. Zudem ist eine fünfte Welle 46 sowohl mit dem Hohlrad des dritten Planetensatzes 6 als auch mit dem Hohlrad des vierten Planetensatzes 7 starr gekoppelt.

Im Bezug auf die Ausgestaltung gemäß Fig. 15 ist das beispielhafte Schaltschema nach Fig. 2 dahingehend abzuwandeln, dass anstelle der zweiten Kupplung 11 in Fig. 1 jeweils die zweite Kupplung 25 in Fig. 15, anstelle der dritten Kupplung 12 in Fig. 1 jeweils die dritte Kupplung 37 in Fig. 15 und anstelle der vierten Kupplung 13 in Fig. 1 jeweils die vierte Kupplung 38 in Fig. 15 zu betätigen ist.

Eine weitere, fünfzehnte bevorzugte Ausgestaltung eines erfindungsgemäßen Mehrstufengetriebes ist in Fig. 16 dargestellt. Als Unterschied zu dem Mehrstufengetriebe gemäß Fig. 1 kann eine Abtriebswelle 48 neben einer Verbindung mit dem Steg des vierten Planetensatzes 7 zum einen mittels einer ersten Kupplung 21 mit einer sechsten Welle 22 verbunden werden, die im weiteren Verlauf mit dem Hohlrad des vierten Planetensatzes 7 und der Kupplung 11 verbunden ist, und zum anderen über eine dritte Kupplung 37 lösbar mit der dritten Welle 14 gekoppelt werden. Des Weiteren ist die Abtriebswelle 48 mittels einer vierten Kupplung 43 mit einer siebten Welle 42 lösbar verbindbar, welche im weiteren Verlauf mit dem Sonnenrad des dritten Planetensatzes 6 in Verbindung steht. Des Weiteren verbindet eine vierte Welle 23 das Hohlrad des zweiten Planetensatzes 5 mit dem Sonnenrad des vierten Planetensatzes 7. Schließlich ist noch eine fünfte Welle 40 starr mit dem Hohlrad des dritten Planetensatzes 6 gekoppelt.

Die Ausführungsform gemäß Fig. 16 stellt ebenfalls eine wirkungsgleiche Getriebevariante zu dem Mehrstufengetriebe gemäß Fig. 1 dar. Bezüglich einer Schaltung der einzelnen Gangstufen ist das beispielhafte Schaltschema nach Fig. 2 dahingehend zu ändern, dass anstelle der ersten Kupplung 10 in Fig. 1 jeweils die erste Kupplung 21 in Fig. 16, anstelle der dritten Kupplung 12 in Fig. 1 jeweils die dritte Kupplung 37 in Fig. 16 und anstelle der vierten Kupplung 13 in Fig. 1 jeweils die vierte Kupplung 43 in Fig. 16 zu betätigen ist.

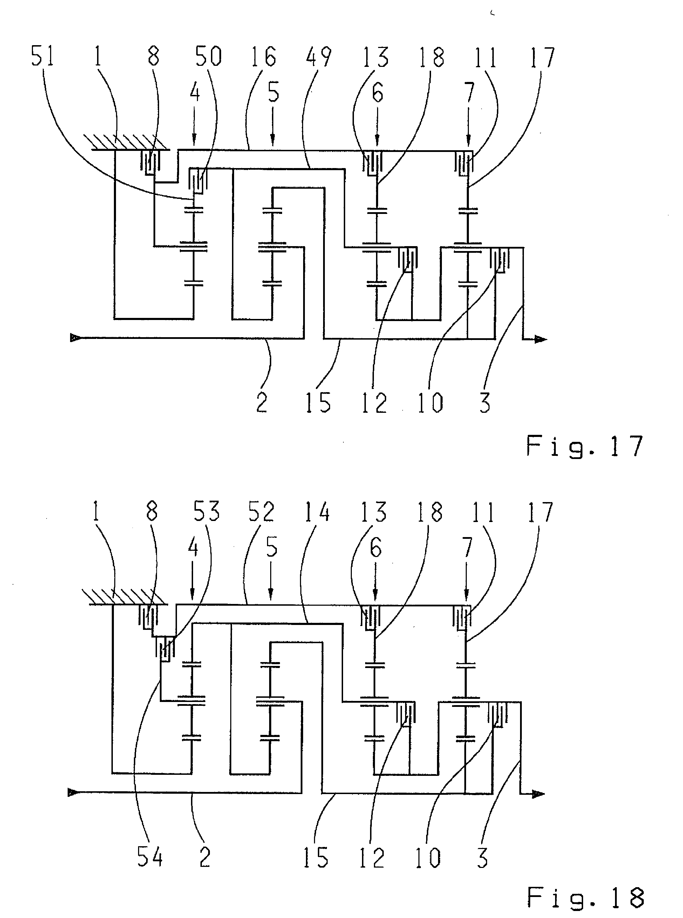

Ferner geht aus Fig. 17 eine sechzehnte bevorzugte Ausgestaltung eines erfindungsgemäßen Mehrstufengetriebes hervor. Diese unterscheidet sich von der Getriebevariante gemäß Fig. 1 dahingehend, dass eine dritte Welle 49, zusätzlich zu einer Verbindung mit dem Sonnenrad des zweiten Planetensatzes 5 und dem Steg des dritten Planetensatzes 6, sowie der möglichen Ankopplung an die Abtriebswelle über die dritte Kupplung 12, mittels einer fünften Kupplung 50 mit einer achten Welle 51 gekoppelt werden kann, die im weiteren Verlauf mit dem Hohlrad des ersten Planetensatzes 4 in Verbindung steht. Zudem ist das Sonnenrad des ersten Planetensatzes 4 drehfest mit dem Gehäuse 1 gekoppelt.

Aufgrund der wirkungsgleichen Ausgestaltung des Mehrstufengetriebes nach Fig. 17 in zu dem Mehrstufengetriebe gemäß Fig. 1 ist das beispielhafte Schaltschema nach Fig. 2 auch auf die sechzehnte Ausgestaltung anzuwenden. Dabei ist das Schaltschema bzgl. der Schaltung der einzelnen Gangstufen dahingehend abzuändern, dass anstelle der zweiten Bremse 9 in Fig. 1 jeweils die fünfte Kupplung 50 in Fig. 17 zu betätigen ist.

Schließlich geht aus Fig. 18 eine siebzehnte bevorzugte Ausgestaltung eines erfindungsgemäßen Mehrstufengetriebes hervor. Diese unterscheidet sich von der Variante gemäß Fig. 1 dahingehend, dass eine fünfte Welle 52, neben einer Verbindung mit der ersten Bremse 8, der zweiten Kupplung 11 und der vierten Kupplung 13, mit einer fünften Kupplung 53 in Verbindung steht, mittels welcher die fünfte Welle 52 mit einer achten Welle 54 lösbar koppelbar ist. Diese achte Welle 54 ist im weiteren Verlauf mit dem Steg des ersten Planetensatzes 4 verbunden. Zudem ist das Sonnenrad des ersten Planetensatzes 4 drehfest mit dem Gehäuse 1 gekoppelt.

Im Bezug auf die letztgenannte Ausgestaltung eines erfindungsgemäßen Mehrstufengetriebes ist das beispielhafte Schaltschema nach Fig. 2 nur dahingehend abzuändern, dass anstelle der zweiten Bremse 9 in Fig. 1 jeweils die fünfte Kupplung 53 in Fig. 18 zu betätigen ist.

Mittels der einzelnen erfindungsgemäßen Ausgestaltungen eines Mehrstufengetriebes lässt sich ein Splittergetriebe für ein Arbeitsfahrzeug mit einem niedrigen Herstellungsaufwand und geringem Gewicht erzielen. Zudem treten bei den erfindungsgemäßen Mehrstufengetrieben jeweils niedrige Absolut- und Relativdrehzahlen, sowie niedrige Planetensatz- und Schaltelementmomente auf. Schließlich werden jeweils eine gute Übersetzungsreihe und gute Verzahnungswirkungsgrade bei gleichzeitig nahezu geometrischen Stufensprüngen erzielt.

Neben den in den Figuren dargestellten Ausführungsformen sind hierbei weitere Ausgestaltungen eines erfindungsgemäßen Mehrstufengetriebes denkbar, insbesondere indem die beiden verschiedenen Möglichkeiten der Anordnung der fünften Kupplung der Fig. 17 und 18 mit den anderweitigen verschiedenen Positionen der ersten, zweiten, dritten und vierten Kupplung der vorhergehenden Fig. jeweils kombiniert werden.

Dabei sind die erfindungsgemäßen Mehrstufengetriebe bevorzugt koaxial aufgebaut, der Abtrieb kann aber auch seitlich zum Getriebe (achsparallel) realisiert werden.

Gemäß der Erfindung ist es zudem denkbar, einzelne Schaltelemente entweder wegfallen zu lassen oder durch eine starre Verbindung zu ersetzen, wodurch sich jeweils ein Mehrstufengetriebe mit einer reduzierten Anzahl an darstellbaren Übersetzungsverhältnissen ergibt. Bevorzugt wäre im Falle der Ausgestaltung nach Fig. 1 ein Weglassen der ersten Kupplung 11 oder der zweiten Bremse 9 vorzunehmen, was jeweils in einem Mehrstufengetriebe mit geringerer Anzahl an darstellbaren Gängen resultieren würde.

Erfindungsgemäß ist es zudem möglich, an jeder geeigneten Stelle des Mehrstufengetriebes zusätzliche Freiläufe vorzusehen, beispielsweise zwischen einer Welle und dem Gehäuse, oder um zwei Wellen gegebenenfalls zu verbinden. Des Weiteren können der Abtrieb prinzipiell überall an der jeweiligen Abtriebswelle und der Antrieb prinzipiell auch überall an der jeweiligen Antriebswelle angeordnet sein.

Im Rahmen einer vorteilhaften Weiterbildung kann die jeweilige Antriebswelle durch ein Kupplungselement von einem Antriebsmotor nach Bedarf getrennt werden, wobei als Kupplungselement ein hydrodynamischer Drehmomentwandler, eine hydrodynamische Kupplung, eine trockene Anfahrkupplung, eine nasse Anfahrkupplung, eine Magnetpulverkupplung, eine Fliehkraftkupplung, etc. einsetzbar sind. Zudem ist es auch möglich, ein derartiges Anfahrelement in Kraftflussrichtung hinter dem Getriebe anzuordnen, wobei in diesem Fall die jeweilige Antriebswelle ständig mit der Kurbelwelle des Antriebsmotors verbunden ist. Alternativ kann auch ein Schaltelement des Mehrstufengetriebes als internes Anfahrelement genutzt werden. Dieses interne Anfahrelement sollte in den potentiellen Anfahrgängen vorzugsweise geschlossen sein, d. h. es wird während des Anfahrvorgangs geschlossen.

Zudem ist es möglich zwischen dem Antriebsmotor und dem Getriebe einen Torsionsschwingungsdämfper anzuordnen.

Schließlich ist es im Rahmen der Erfindung ebenso denkbar, auf jeder der Wellen, bevorzugt auf der jeweiligen Antriebswelle oder der jeweiligen Abtriebswelle eine elektrische Maschine als Generator und/oder als zusätzliche Antriebsmaschine anzuordnen. Selbstverständlich fällt auch jede konstruktive Ausbildung, insbesondere jede räumlich Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildung nicht explizit in den Figuren oder in der Beschreibung dargestellt ist.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: vierter Planetensatz
- 8: erste Bremse
- 9: zweite Bremse
- 10: erste Kupplung
- 11: zweite Kupplung
- 12: dritte Kupplung
- 13: vierte Kupplung
- 14: dritte Welle
- 15: vierte Welle
- 16: fünfte Welle
- 17: sechste Welle
- 18: siebte Welle
- 19: achte Welle
- 20: Abtriebswelle
- 21: erste Kupplung
- 22: sechste Welle
- 23: vierte Welle
- 24: vierte Welle
- 25: zweite Kupplung
- 26: sechste Welle
- 27: fünfte Welle
- 28: Abtriebswelle
- 29: dritte Kupplung
- 30: siebte Welle
- 31: dritte Welle
- 32: dritte Welle
- 33: dritte Kupplung
- 34: siebte Welle
- 35: Abtriebswelle
- 36: dritte Welle
- 37: dritte Kupplung
- 38: vierte Kupplung
- 39: siebte Welle
- 40: fünfte Welle
- 41: Abtriebswelle
- 42: siebte Welle
- 43: vierte Kupplung
- 44: Abtriebswelle
- 45: Abtriebswelle
- 46: fünfte Welle
- 47: Abtriebswelle
- 48: Abtriebswelle
- 49: dritte Welle
- 50: fünfte Kupplung
- 51: achte Welle
- 52: fünfte Welle
- 53: fünfte Kupplung
- 54: achte Welle

## Patentansprüche

1. Mehrstufengetriebe in Planetenbauweise, insbesondere Splittergetriebe einer Arbeitsmaschine, mit einem Gehäuse (1), in welchem vier Planetensätze (4, 5, 6, 7) und mehrere Wellen aufgenommen sind, und mit Schaltelementen, welche durch zumindest eine Bremse und Kupplungen gebildet sind und mittels deren gezielter Betätigung verschiedene Übersetzungsverhältnisse zwischen einer Antriebs- (2) und einer Abtriebswelle (3; 20; 28; 35; 41; 44; 45; 47; 48) darstellbar sind, wobei die Antriebswelle (2) mit einem Steg eines zweiten Planetensatzes (5) verbunden ist, dessen Sonnenrad mit einer dritten Welle (14; 31; 32; 36; 49) und dessen Hohlrad mit einer vierten Welle (15; 23; 24) gekoppelt ist, wobei die Abtriebswelle (3; 20; 28; 35; 41; 44; 45; 47; 48) mit einem Steg eines vierten Planetensatzes (7) in Verbindung steht, und wobei eine fünfte Welle (16; 27; 40; 46; 52) mittels einer ersten Bremse (8) am Gehäuse (1) festsetzbar ist, **dadurch gekennzeichnet, dass** die Abtriebswelle (3; 28; 35; 41) ferner mittels einer ersten Kupplung (10) mit der vierten Welle (15) lösbar verbindbar ist, welche zudem mit einem Sonnenrad des vierten Planetensatzes (7) in Verbindung steht, wobei ein Hohlrad des vierten Planetensatzes (7) mit einer sechsten Welle (17) gekoppelt ist, die über eine zweite Kupplung (11) mit der fünften Welle (16; 40; 52) verbindbar ist oder dass ein Hohlrad des vierten Planetensatzes (7) mit einer sechsten Welle (22) verbunden ist, die zum einen mittels einer ersten Kupplung (21) mit der Ab-triebswelle (20; 44; 45; 47; 48) und zum anderen über eine zweite Kupplung (11) mit der fünften Welle (16; 40) lösbar verbindbar ist, wobei die vierte Welle (23) zudem mit einem Sonnenrad des vierten Planetensatzes (7) in Verbindung steht.

2. Mehrstufengetriebe nach Anspruch 1, **dadurch gekennzeichnet, dass** die Abtriebswelle (3; 20) zudem mit einem Sonnenrad eines dritten Planetensatzes (6) verbunden und mittels einer dritten Kupplung (12) mit der dritten Welle (14; 49) koppelbar ist, die ferner mit einem Steg des dritten Planetensatzes (6) in Verbindung steht, wobei ein Hohlrad des dritten Planetensatzes (6) mit einer siebten Welle (18) gekoppelt ist, welche über eine vierte Kupplung (13) mit der fünften Welle (16; 27; 52) lösbar verbindbar ist.

3. Mehrstufengetriebe nach einem der Ansprüche 1 bis 2, **dadurch gekennzeichnet, dass** die Abtriebswelle (28; 44) zudem mit einem Sonnenrad eines dritten Planetensatzes (6) verbunden und mittels einer dritten Kupplung (29) mit einer siebten Welle (30) koppelbar ist, welche des Weiteren zum einen mit einem Hohlrad des dritten Planetensatzes (6) in Verbindung steht und zum anderen über eine vierte Kupplung (13) mit der fünften Welle (16; 27) lösbar verbindbar ist, wobei die dritte Welle (31) zudem mit einem Steg des dritten Planetensatzes (6) gekoppelt ist.

4. Mehrstufengetriebe nach einem der Ansprüche 1 bis 2, **dadurch gekennzeichnet, dass** die dritte Welle (32) zudem mit einem Steg eines dritten Planetensatzes (6) verbunden und mittels einer dritten Kupplung (33) mit einer siebten Welle (34) koppelbar ist, die zum einen mit einem Hohlrad des dritten Planetensatzes (6) in Verbindung steht und zum anderen über eine vierte Kupplung (13) mit der fünften Welle (16; 27) lösbar verbindbar ist, wobei die Abtriebswelle (35; 45) des Weiteren mit einem Sonnenrad des dritten Planetensatzes (6) gekoppelt ist.

5. Mehrstufengetriebe nach einem der Ansprüche 1 bis 2, **dadurch gekennzeichnet, dass** die Abtriebswelle (3; 47) zudem mit einem Sonnenrad eines dritten Planetensatzes (6) verbunden und mittels einer dritten Kupplung (37) mit der dritten Welle (36) koppelbar ist, die des Weiteren über eine vierte Kupplung (38) mit einer siebten Welle (39) lösbar verbindbar ist, wobei diese siebte Welle (39) mit einem Steg des dritten Planetensatzes (6) und die fünfte Welle (40; 46) mit einem Hohlrad des dritten Planetensatzes (6) in Verbindung steht.

6. Mehrstufengetriebe nach einem der Ansprüche 1 bis 2, **dadurch gekennzeichnet, dass** die Abtriebswelle (41; 48) zudem zum einen mittels einer dritten Kupplung (37) mit der dritten Welle (14) und zum anderen über eine vierte Kupplung (43) mit einer siebten Welle (42) koppelbar ist, die mit einem Sonnenrad eines dritten Planetensatzes (6) in Verbindung steht, wobei ein Steg des dritten Planetensatzes (6) mit der dritten Welle (14) und ein Hohlrad des dritten Planetensatzes (6) mit der fünften Welle (40; 46) gekoppelt ist.

7. Mehrstufengetriebe nach einem der vorhergehenden Ansprüche,
**dadurch gekennzeichnet, dass** die dritte Welle (14; 31; 32; 36) ferner mit einem Hohlrad eines ersten Planetensatzes (4) verbunden ist, dessen Steg mit der fünften Welle (16; 27; 40; 46) und dessen Sonnenrad mit einer achten Welle (19) gekoppelt ist, wobei diese achte Welle (19) über eine zweite Bremse (9) am Gehäuse (1) festsetzbar ist.

8. Mehrstufengetriebe nach einem der vorhergehenden Ansprüche,
**dadurch gekennzeichnet, dass** die dritte Welle (49) ferner mittels einer fünften Kupplung (50) mit einer achten Welle (51) koppelbar ist, die mit einem Hohlrad eines ersten Planetensatzes (4) in Verbindung steht, wobei ein Steg des ersten Plane-tensatzes (4) mit der fünften Welle (16) verbunden und ein Sonnenrad des ersten Planetensatzes (4) drehfest mit dem Gehäuse (1) gekoppelt ist.

9. Mehrstufengetriebe nach einem der vorhergehenden Ansprüche,
**dadurch gekennzeichnet, dass** die fünfte Welle (52) ferner mittels einer fünften Kupplung (53) mit einer achten Welle (54) koppelbar ist, die mit einem Steg eines ersten Planetensatzes (4) in Verbindung steht, wobei ein Hohlrad des ersten Planetensatzes (4) mit der dritten Welle (14) gekoppelt und ein Sonnenrad des ersten Planetensatzes (4) drehfest mit dem Gehäuse (1) verbunden ist.

10. Mehrstufengetriebe nach Anspruch 7, **dadurch gekennzeichnet, dass** sich ein erstes Übersetzungsverhältnis durch Schließen der ersten Bremse (8), sowie der zweiten (11; 25) und dritten Kupplung (12; 29; 33; 37), ein zweites Übersetzungsverhältnis durch Betätigen der ersten (8) und zweiten Bremse (9), sowie der zweiten Kupplung (11; 25), ein drittes Übersetzungsverhältnis durch Schließen der zweiten Bremse (9), sowie der zweiten (11; 25) und vierten Kupplung (13; 38; 43), ein viertes Übersetzungsverhältnis durch Betätigen der zweiten Bremse (9), sowie der zweiten (11; 25) und dritten Kupplung (12; 29; 33; 37), ein fünftes Übersetzungsverhältnis durch Schließen der zweiten Bremse (9), sowie der ersten (10; 21) und zweiten Kupplung (11; 25), ein sechstes Übersetzungsverhältnis durch Betätigen der zweiten Bremse (9), sowie der ersten (10; 21) und dritten Kupplung (12; 29; 33; 37) oder durch Schließen der ersten Bremse (8), sowie der ersten (10; 21) und dritten Kupplung (12; 29; 33; 37) oder durch Betätigen der ersten (10; 21), dritten (12; 29; 33; 37) und vierten Kupplung (13; 38; 43) oder durch Schließen der ersten (10; 21), zweiten (11; 25) und vierten Kupplung (13; 38; 43) oder durch Betätigen der zweiten (11; 25), dritten (12; 29; 33; 37) und vierten Kupplung (13; 38; 43) oder durch Schließen der ersten (10; 21), zweiten (11; 25) und dritten Kupplung (12; 29; 33; 37), ein siebtes Übersetzungsverhältnis durch Betätigen der zweiten Bremse (9), sowie der ersten (10; 21) und vierten Kupplung (13; 38; 43), ein achtes Übersetzungsverhältnis durch Schließen der ersten Bremse (8), sowie der ersten (10; 21) und vierten Kupplung (13; 38; 43), und ein neuntes Übersetzungsverhältnis durch Betätigen der ersten (8) und zweiten Bremse (9), sowie der ersten Kupplung (10; 21) ergibt.

11. Mehrstufengetriebe nach Anspruch 8 oder 9, **dadurch gekennzeichnet, dass** sich ein erstes Übersetzungsverhältnis durch Schließen der ersten Bremse (8), sowie der zweiten (11) und dritten Kupplung (12), ein zweites Übersetzungsverhältnis durch Betätigen der ersten Bremse (8), sowie der zweiten (11) und fünften Kupplung (50; 53), ein drittes Übersetzungsverhältnis durch Schließen der zweiten (11), vierten (13) und fünften Kupplung (50; 53), ein viertes Übersetzungsverhältnis durch Betätigen der zweiten (11), dritten (12) und fünften Kupplung (50; 53), ein fünftes Übersetzungsverhältnis durch Schließen der ersten (10), zweiten (11) und fünften Kupplung (50; 53), ein sechstes Übersetzungsverhältnis durch Betätigen der ersten (10), dritten (12) und fünften Kupplung (50; 53) oder durch Schließen der ersten Bremse (8), sowie der ersten (10) und dritten Kupplung (12) oder durch Betätigen der ersten (10), dritten (12) und vierten Kupplung (13) oder durch Schließen der ersten (10), zweiten (11) und vierten Kupplung (13) oder durch Betätigen der zweiten (11), dritten (12) und vierten Kupplung (13) oder durch Schließen der ersten (10), zweiten (11) und dritten Kupplung (12), ein siebtes Übersetzungsverhältnis durch Betätigen der der ersten (10), vierten (13) und fünften Kupplung (50; 53), ein achtes Übersetzungsverhältnis durch Schließen der ersten Bremse (8), sowie der ersten (10) und vierten Kupplung (13), und ein neuntes Übersetzungsverhältnis durch Betätigen der ersten Bremse (8), sowie der ersten (10) und fünften Kupplung (50; 53) ergibt.

12. Mehrstufengetriebe nach Anspruch 10 oder 11, **dadurch gekennzeichnet, dass** sich ein zusätzliches Übersetzungsverhältnis durch Schließen der ersten Bremse (8), sowie der zweiten (11; 25) und vierten Kupplung (13; 38; 43) ergibt.

13. Mehrstufengetriebe nach einem der vorhergehenden Ansprüche, **dadurch gekennzeichnet, dass** die Abtriebswelle (3; 20; 28; 35; 41; 44; 45; 47; 48) als Antrieb und die Antriebswelle (2) als Abtrieb des Mehrstufengetriebes dient.

## Claims

1. Multi-stage gearbox of planetary construction, in particular splitter gear of a working machine, with a housing (1) in which four planet sets (4, 5, 6, 7) and a plurality of shafts are accommodated, and with shift elements which are formed by at least one brake and clutches and by means of the targeted actuation of which various step-up ratios can be generated between a drive shaft (2) and an output shaft (3; 20; 28; 35; 41; 44; 45; 47; 48), the drive shaft (2) being connected to a web of a second planet set (5), the sun wheel of which is coupled to a third shaft (14; 31; 32; 36; 49) and the wing wheel of which is coupled to a fourth shaft (15; 23; 24), the output shaft (3; 20; 28; 35; 41; 44; 45; 47; 48) being connected to a web of a fourth planet set (7), and a fifth shaft (16; 27; 40; 46; 52) being lockable on the housing (1) by means of a first brake (8), **characterized in that**, furthermore, the output shaft (3; 28; 35; 41) is connected releaseably by means of a first clutch (10) to the fourth shaft (15) which, moreover, is connected to a sun wheel of the fourth planet set (7), a wing wheel of the fourth planet set (7) being coupled to a sixth shaft (17) which is connectable to the fifth shaft (16; 40; 52) via a second clutch (11), or **in that** a wing wheel of the fourth planet set (7) is connected to a sixth shaft (22) which is connectable releaseably, on the one hand, to the output shaft (20; 44; 45; 47; 48) by means of a first clutch (21) and, on the other hand, to the fifth shaft (16; 40) via a second clutch (11), the fourth shaft (23) being connected, moreover, to a sun wheel of the fourth planet set (7).

2. Multi-stage gearbox according to Claim 1, **characterized in that** the output shaft (3; 20) is connected, moreover, to a sun wheel of a third planet set (6) and is coupleable by means of a third clutch (12) to the third shaft (14; 49) which, furthermore, is connected to a web of the third planet set (6), a wing wheel of the third planet set (6) being coupled to a seventh shaft (18) which is connectable releaseably to the fifth shaft (16; 27; 52) via a fourth clutch (13).

3. Multi-stage gearbox according to either one of Claims 1 and 2, **characterized in that** output shaft (28; 44) is connected, moreover, to a sun wheel of a third planet set (6) and is coupleable by means of a third clutch (29) to a seventh shaft (30) which furthermore, on the one hand, is connected to a wing wheel of the third planet set (6) and, on the other hand, is connectable releaseably to the fifth shaft (16; 27) via a fourth clutch (13), the third shaft (31) being coupled, moreover, to a web of the third planet set (6).

4. Multi-stage gearbox according to either one of Claims 1 and 2, **characterized in that** the third shaft (32) is connected, moreover, to a web of a third planet set (6) and is coupleable by means of a third clutch (33) to a seventh shaft (34) which, on the one hand, is connected to a wing wheel of the third planet set (6) and, on the other hand, is connectable releaseably to the fifth shaft (16; 27) via a fourth clutch (13), the output shaft (35; 45) being coupled, furthermore, to a sun wheel of the third planet set (6).

5. Multi-stage gearbox according to either one of Claims 1 and 2, **characterized in that** the output shaft (3; 47) is connected, moreover, to a sun wheel of a third planet set (6) and is coupleable by means of a third clutch (37) to the third shaft (36) which, furthermore, is connectable releaseably to a seventh shaft (39) via a fourth clutch (38), this seventh shaft (39) being connected to a web of the third planet set (6) and the fifth shaft (40; 46) being connected to a wing wheel of the third planet set (6).

6. Multi-stage gearbox according to either one of Claims 1 and 2, **characterized in that** the output shaft (41; 48) is coupleable moreover, on the one hand, by means of a third clutch (37) to the third shaft (14) and, on the other hand, via a fourth clutch (43) to a seventh shaft (42) which is connected to a sun wheel of a third planet set (6), a web of the third planet set (6) being coupled to the third shaft (14) and a wing wheel of the third planet set (6) being coupled to the fifth shaft (40; 46).

7. Multi-stage gearbox according to one of the preceding claims, **characterized in that**, furthermore, the third shaft (14; 31; 32; 36) is connected to a wing wheel of a first planet set (4), the web of which is coupled to the fifth shaft (16; 27; 40; 46) and the sun wheel of which is coupled to an eighth shaft (19), this eighth shaft (19) being lockable on the housing (1) via a second brake (9).

8. Multi-stage gearbox according to one of the preceding claims, **characterized in that**, furthermore, the third shaft (49) is coupleable by means of a fifth clutch (50) to an eighth shaft (51) which is connected to a wing wheel of a first planet set (4), a web of the first planet set (4) being connected to the fifth shaft (16) and a sun wheel of the first planet set (4) being coupled fixedly in terms of rotation to the housing (1).

9. Multi-stage gearbox according to one of the preceding claims, **characterized in that**, furthermore, the fifth shaft (52) is coupleable by means of a fifth clutch (53) to an eighth shaft (54) which is connected to a web of a first planet set (4), a wing wheel of the first planet set (4) being coupled to the third shaft (14) and a sun wheel of the first planet set (4) being connected fixedly in terms of rotation to the housing (1).

10. Multi-stage gearbox according to Claim 7, **characterized in that** a first step-up ratio is obtained by closing the first brake (8) and the second (11; 25) and the third (12; 29; 33; 37) clutch, a second step-up ratio is obtained by actuating the first (8) and the second (9) brake and the second clutch (11; 25), a third step-ratio is obtained by closing the second brake (9) and the second (11; 25) and the fourth (13; 38; 43) clutch, a fourth step-up ratio is obtained by actuating the second brake (9) and the second (11; 25) and the third (12; 29; 33; 37) clutch, a fifth step-up ratio is obtained by closing the second brake (9) and the first (10; 21) and the second (11; 25) clutch, a sixth step-up ratio is obtained by actuating the second brake (9) and the first (10; 21) and the third (12; 29; 33; 37) clutch or by closing the first brake (8) and the first (10; 21) and the third (12; 29; 33; 37) clutch or by actuating the first (10; 21), the third (12; 29; 33; 37) and the fourth (13; 38; 43) clutch or by closing the first (10; 21), the second (11; 25) and the fourth (13; 38; 43) clutch or by actuating the second (11; 25), the third (12; 29; 33; 37) and the fourth (13; 38; 43) clutch or by closing the first (10; 21), the second (11; 25) and the third (12; 29; 33; 37) clutch, a seventh step-up ratio is obtained by actuating the second brake (9) and the first (10; 21) and the fourth (13; 38; 43) clutch, an eighth step-up ratio is obtained by closing the first brake (8) and the first (10; 21) and the fourth (13; 38; 43) clutch, and a ninth step-up ratio is obtained by actuating the first (8) and the second (9) brake and the first clutch (10; 21).

11. Multi-stage gearbox according to Claim 8 or 9, **characterized in that** a first step-up ratio is obtained by closing the first brake (8) and the second (11) and the third (12) clutch, a second step-up ratio is obtained by actuating the first brake (8) and the second (11) and the fifth (50; 53) clutch, a third step-up ratio is obtained by closing the second (11), the fourth (13) and the fifth (50; 53) clutch, a fourth step-up ratio is obtained by actuating the second (11), the third (12) and the fifth (50; 53) clutch, a fifth step-up ratio is obtained by closing the first (10), the second (11), and the fifth (50; 53) clutch, a sixth step-up ratio is obtained by actuating the first (10), the third (12) and the fifth (50; 53) clutch or by closing the first brake (8) and the first (10) and the third (12) clutch or by actuating the first (10), the third (12) and the fourth (13) clutch or by closing the first (10), the second (11) and the fourth (13) clutch or by actuating the second (11), the third (12) and the fourth (13) clutch or by closing the first (10), the second (11) and the third (12) clutch, a seventh step-up ratio is obtained by actuating the first (10), the fourth (13) and the fifth (50; 53) clutch, an eighth step-up ratio is obtained by closing the first brake (8) and the first (10) and the fourth (13) clutch, and a ninth step-up ratio is obtained by actuating the first brake (8) and the first (10) and the fifth (50; 53) clutch.

12. Multi-stage gearbox according to Claim 10 or 11, **characterized in that** an additional step-up ratio is obtained by closing the first brake (8) and the second (11; 25) and the fourth (13; 38; 43) clutch.

13. Multi-stage gearbox according to one of the preceding claims, **characterized in that** the output shaft (3; 20; 28; 35; 41; 44; 45; 47; 48) serves as the drive and the drive shaft (2) as the output of the multi-stage gearbox.

## Revendications

1. Boîte de vitesses multiétagée de construction planétaire, en particulier boîte de vitesses à doubleur de gamme d'une machine de travail, comprenant un boîtier (1) dans lequel sont reçus quatre trains planétaires (4, 5, 6, 7) et plusieurs arbres, et comprenant des éléments de commutation, lesquels sont formés par au moins un frein et des embrayages, et par l'actionnement ciblé desquels différents rapports de transmission entre un arbre d'entraînement (2) et un arbre de sortie (3 ; 20 ; 28 ; 35 ; 41 ; 44 ; 45 ; 47 ; 48) peuvent être réalisés, l'arbre d'entraînement (2) étant relié à un porte-satellites d'un deuxième train planétaire (5) dont la roue solaire est accouplée à un troisième arbre (14 ; 31 ; 32 ; 36 ; 49) et dont la couronne dentée est accouplée à un quatrième arbre (15 ; 23 ; 24), l'arbre de sortie (3 ; 20 ; 28 ; 35 ; 41 ; 44 ; 45 ; 47 ; 48) étant en liaison avec un porte-satellites d'un quatrième train planétaire (7), et un cinquième arbre (16 ; 27 ; 40 ; 46 ; 52) pouvant être fixé sur le boîtier (1) au moyen d'un premier frein (8), **caractérisée en ce que** l'arbre de sortie (3 ; 28 ; 35 ; 41) peut en outre être relié de manière amovible au quatrième arbre (15) au moyen d'un premier embrayage (10), lequel quatrième arbre est de plus en liaison avec une roue solaire du quatrième train planétaire (7), une couronne dentée du quatrième train planétaire (7) étant accouplée à un sixième arbre (17) qui peut être relié au cinquième arbre (16 ; 40 ; 52) par le biais d'un deuxième embrayage (11), ou **en ce qu'**une couronne dentée du quatrième train planétaire (7) est reliée à un sixième arbre (22) qui peut être relié de manière amovible d'une part à l'arbre de sortie (20 ; 44 ; 45 ; 47 ; 48) au moyen d'un premier embrayage (21) et d'autre part au cinquième arbre (16 ; 40) par le biais d'un deuxième embrayage (11), le quatrième arbre (23) étant de plus en liaison avec une roue solaire du quatrième train planétaire (7).

2. Boîte de vitesses multiétagée selon la revendication 1, **caractérisée en ce que** l'arbre de sortie (3 ; 20) est de plus relié à une roue solaire d'un troisième train planétaire (6) et peut être accouplé au troisième arbre (14 ; 49) au moyen d'un troisième embrayage (12), lequel troisième arbre est en outre en liaison avec un porte-satellites du troisième train planétaire (6), une couronne dentée du troisième train planétaire (6) étant accouplée à un septième arbre (18), lequel peut être relié de manière amovible au cinquième arbre (16 ; 27 ; 52) par le biais d'un quatrième embrayage (13).

3. Boîte de vitesses multiétagée selon l'une quelconque des revendications 1 et 2, **caractérisée en ce que** l'arbre de sortie (28 ; 44) est de plus relié à une roue solaire d'un troisième train planétaire (6) et peut être accouplé à un septième arbre (30) au moyen d'un troisième embrayage (29), lequel septième arbre est en outre d'une part en liaison avec une couronne dentée du troisième train planétaire (6) et peut d'autre part être relié de manière amovible au cinquième arbre (16 ; 27) par le biais d'un quatrième embrayage (13), le troisième arbre (31) étant de plus accouplé à un porte-satellites du troisième train planétaire (6).

4. Boîte de vitesses multiétagée selon l'une quelconque des revendications 1 et 2, **caractérisée en ce que** le troisième arbre (32) est de plus relié à un porte-satellites d'un troisième train planétaire (6) et peut être accouplé à un septième arbre (34) au moyen d'un troisième embrayage (33), lequel septième arbre est d'une part en liaison avec une couronne dentée du troisième train planétaire (6) et peut d'autre part être relié de manière amovible au cinquième arbre (16 ; 27) par le biais d'un quatrième embrayage (13), l'arbre de sortie (35, 45) étant en outre accouplé à une roue solaire du troisième train planétaire (6).

5. Boîte de vitesses multiétagée selon l'une quelconque des revendications 1 et 2, **caractérisée en ce que** l'arbre de sortie (3 ; 47) est de plus relié à une roue solaire d'un troisième train planétaire (6) et peut être accouplé au troisième arbre (36) au moyen d'un troisième embrayage (37), lequel troisième arbre peut en outre être relié de manière amovible à un septième arbre (39) par le biais d'un quatrième embrayage (38), ce septième arbre (39) étant en liaison avec un porte-satellites du troisième train planétaire (6) et le cinquième arbre (40 ; 46) étant en liaison avec une couronne dentée du troisième train planétaire (6).

6. Boîte de vitesses multiétagée selon l'une quelconque des revendications 1 et 2, **caractérisée en ce que** l'arbre de sortie (41 ; 48) peut de plus être accouplé d'une part au troisième arbre (14) au moyen d'un troisième embrayage (37) et d'autre part à un septième arbre (42) par le biais d'un quatrième embrayage (43), lequel septième arbre est en liaison avec une roue solaire d'un troisième train planétaire (6), un porte-satellites du troisième train planétaire (6) étant accouplé au troisième arbre (14) et une couronne dentée du troisième train planétaire (6) étant accouplée au cinquième arbre (40 ; 46).

7. Boîte de vitesses multiétagée selon l'une quelconque des revendications précédentes, **caractérisée en ce que** le troisième arbre (14 ; 31 ; 32 ; 36) est en outre relié à une couronne dentée d'un premier train planétaire (4) dont le porte-satellites est accouplé au cinquième arbre (16 ; 27 ; 40 ; 46) et dont la roue solaire est accouplée à un huitième arbre (19), ce huitième arbre (19) pouvant être fixé sur le boîtier (1) par le biais d'un deuxième frein (9).

8. Boîte de vitesses multiétagée selon l'une quelconque des revendications précédentes, **caractérisée en ce que** le troisième arbre (49) peut en outre être accouplé à un huitième arbre (51) au moyen d'un cinquième embrayage (50), lequel huitième arbre est en liaison avec une couronne dentée d'un premier train planétaire (4), un porte-satellites du premier train planétaire (4) étant relié au cinquième arbre (16) et une roue solaire du premier train planétaire (4) étant accouplée au boîtier (1) de manière solidaire en rotation.

9. Boîte de vitesses multiétagée selon l'une quelconque des revendications précédentes, **caractérisée en ce que** le cinquième arbre (52) peut en outre être accouplé à un huitième arbre (54) au moyen d'un cinquième embrayage (53), lequel huitième arbre est en liaison avec un porte-satellites d'un premier train planétaire (4), une couronne dentée du premier train planétaire (4) étant accouplée au troisième arbre (14) et une roue solaire du premier train planétaire (4) étant reliée au boîtier (1) de manière solidaire en rotation.

10. Boîte de vitesses multiétagée selon la revendication 7, **caractérisée en ce qu'**un premier rapport de transmission s'obtient par fermeture du premier frein (8), ainsi que du deuxième (11 ; 25) et du troisième embrayage (12 ; 29 ; 33 ; 37), un deuxième rapport de transmission s'obtient par actionnement du premier (8) et du deuxième frein (9), ainsi que du deuxième embrayage (11 ; 25), un troisième rapport de transmission s'obtient par fermeture du deuxième frein (9), ainsi que du deuxième (11 ; 25) et du quatrième embrayage (13 ; 38 ; 43), un quatrième rapport de transmission s'obtient par actionnement du deuxième frein (9), ainsi que du deuxième (11 ; 25) et du troisième embrayage (12 ; 29 ; 33 ; 37), un cinquième rapport de transmission s'obtient par fermeture du deuxième frein (9), ainsi que du premier (10 ; 21) et du deuxième embrayage (11 ; 25), un sixième rapport de transmission s'obtient par actionnement du deuxième frein (9), ainsi que du premier (10 ; 21) et du troisième embrayage (12 ; 29 ; 33 ; 37), ou par fermeture du premier frein (8), ainsi que du premier (10 ; 21) et du troisième embrayage (12 ; 29 ; 33 ; 37), ou par actionnement du premier (10 ; 21), du troisième (12 ; 29 ; 33 ; 37) et du quatrième embrayage (13 ; 38 ; 43), ou par fermeture du premier (10 ; 21), du deuxième (11 ; 25) et du quatrième embrayage (13 ; 38 ; 43), ou par actionnement du deuxième (11 ; 25), du troisième (12 ; 29 ; 33 ; 37) et du quatrième embrayage (13 ; 38 ; 43), ou par fermeture du premier (10 ; 21), du deuxième (11 ; 25) et du troisième embrayage (12 ; 29 ; 33 ; 37), un septième rapport de transmission s'obtient par actionnement du deuxième frein (9), ainsi que du premier (10 ; 21) et du quatrième embrayage (13 ; 38 ; 43), un huitième rapport de transmission s'obtient par fermeture du premier frein (8), ainsi que du premier (10 ; 21) et du quatrième embrayage (13 ; 38 ; 43), et un neuvième rapport de transmission s'obtient par actionnement du premier (8) et du deuxième frein (9), ainsi que du premier embrayage (10 ; 21).

11. Boîte de vitesses multiétagée selon la revendication 8 ou 9, **caractérisée en ce qu'**un premier rapport de transmission s'obtient par fermeture du premier frein (8), ainsi que du deuxième (11) et du troisième embrayage (12), un deuxième rapport de transmission s'obtient par actionnement du premier frein (8), ainsi que du deuxième (11) et du cinquième embrayage (50 ; 53), un troisième rapport de transmission s'obtient par fermeture du deuxième (11), du quatrième (13) et du cinquième embrayage (50 ; 53), un quatrième rapport de transmission s'obtient par actionnement du deuxième (11), du troisième (12) et du cinquième embrayage (50 ; 53), un cinquième rapport de transmission s'obtient par fermeture du premier (10), du deuxième (11) et du cinquième embrayage (50 ; 53), un sixième rapport de transmission s'obtient par actionnement du premier (10), du troisième (12) et du cinquième embrayage (50 ; 53) ou par fermeture du premier frein (8), ainsi que du premier (10) et du troisième embrayage (12), ou par actionnement du premier (10), du troisième (12) et du quatrième embrayage (13), ou par fermeture du premier (10), du deuxième (11) et du quatrième embrayage (13), ou par actionnement du deuxième (11), du troisième (12) et du quatrième embrayage (13), ou par fermeture du premier (10), du deuxième (11) et du troisième embrayage (12), un septième rapport de transmission s'obtient par actionnement du premier (10), du quatrième (13) et du cinquième embrayage (50 ; 53), un huitième rapport de transmission s'obtient par fermeture du premier frein (8), ainsi que du premier (10) et du quatrième embrayage (13), et un neuvième rapport de transmission s'obtient par actionnement du premier frein (8), ainsi que du premier (10) et du cinquième embrayage (50 ; 53).

12. Boîte de vitesses multiétagée selon la revendication 10 ou 11, **caractérisée en ce qu'**un premier rapport de transmission supplémentaire s'obtient par fermeture du premier frein (8), ainsi que du deuxième (11 ; 25) et du quatrième embrayage (13 ; 38 ; 43).

13. Boîte de vitesses multiétagée selon l'une quelconque des revendications précédentes, **caractérisée en ce que** l'arbre de sortie (3 ; 20 ; 28 ; 35 ; 41 ; 44 ; 45 ; 47 ; 48) sert d'entraînement et l'arbre d'entraînement (2) sert de sortie de la boîte de vitesses multiétagée.
